# EUROPÄISCHE PATENTSCHRIFT

(11) **EP 3 356 265 B1**
(45) Veröffentlichungstag und Bekanntmachung des Hinweises auf die Patenterteilung: **16.03.2022**
(21) Anmeldenummer: 16730329.6
(22) Anmeldetag: 14.06.2016
(51) Int. Cl.: B65G 47/46, B65G 47/51, B65B 35/24, B65B 61/20, B65B 65/00

(54) **SPEICHERTISCH, VERFAHREN ZUM BETREIBEN EINES SPEICHERTISCHES SOWIE VERPACKUNGSANLAGE MIT EINEM SPEICHERTISCH**
STORAGE TABLE, METHOD FOR OPERATING A STORAGE TABLE AND PACKAGING MACHINE WITH A STORAGE TABLE
TABLE D'ACCUMULATION, PROCÉDÉ D'OPERATION D'UNE TABLE D'ACCUMULATION ET MACHINE D'EMBALLAGE AVEC UNE TABLE D'ACCUMULATION

(30) Priorität: 29.09.2015 DE 102015116472
(43) Veröffentlichungstag der Anmeldung: 08.08.2018
(73) Patentinhaber: SIG Technology AG, 8212 Neuhausen am Rheinfall (CH)
(72) Erfinder: DÖRENBERG, Udo, 50171 Kerpen (DE)
(74) Vertreter: Cohausz & Florack
(86) Internationale Anmeldenummer: PCT/EP2016/063555
(87) Internationale Veröffentlichungsnummer: WO 2017/054942

(56) Entgegenhaltungen:
- EP-A1- 0 373 060
- WO-A1-2014/087257
- DE-A1- 10 312 695
- DE-A1-102005 061 309
- DE-A1-102012 220 479
- FR-A1- 2 988 709
- JP-A- H07 267 351
- US-A1- 2002 117 429

## Beschreibung

Der Gegenstand betrifft einen Speichertisch einer Verpackungsanlage, eine Verpackungsanlage mit einem solchen Speichertisch sowie ein Verfahren zum Betreiben eines Speichertisches.

DE 10 2012 220479 A1 beschreibt einen Speichertisch einer Verpackungsanlage umfassend, zwei Einschleusungen, zwei Ausschleusungen, und eine Mehrzahl von separat voneinander bestückbaren, zwischen den Einschleusungen und den Ausschleusungen angeordneten Speicherlinien.

Verpackungsanlagen zeichnen sich heutzutage durch eine Mehrzahl von Verpackungsstationen (Verpackungseinrichtungen) aus, welche die Verpackungen in jeweils unterschiedlichen Arbeitsschritten weiter verarbeiten. So sind beispielsweise bei Abfüllanlagen im Anschluss an eine Füllmaschine beispielsweise zunächst ein Strohhalm-Applikator und anschließend ein Schrumpffolien-Applikator im Einsatz. Im Schrumpffolien-Applikator werden mehrere Verpackungen zu einem Gebinde zusammengefasst. Die genannten Einrichtungen sind natürlich rein beispielhaft, sind jedoch vom Gegenstand vollständig umfasst.

Im Rahmen der üblichen Entwicklung einer Verpackungsanlage steht stets die Verarbeitungsrate (Anzahl an Verpackungen / Zeiteinheit) im Vordergrund. Je höher die Verarbeitungsrate, desto effizienter ist die Anlage.

Das bedeutet, dass es stets das Ziel ist, die Verarbeitungsrate jeder einzelnen Einrichtung und somit der gesamten Verpackungsanlage zu erhöhen. Bei Betreiben einer Verpackungsanlage ist es das Ziel, die jeweils langsamste Verpackungseinrichtung möglichst mit ihrer maximalen Verarbeitungsrate zu betreiben, so dass der Durchsatz an Verpackungen einer Verpackungsanlage möglichst maximiert ist.

Da es im Rahmen der Verarbeitung der Verpackungen an einzelnen Verpackungseinrichtungen auch zu Störungen kommen kann, ist bisher vorgesehen, dass zwischen zwei Verpackungseinrichtungen ein Speichertisch angeordnet sein kann. Dieser Speichertisch nimmt Verpackungen auf, wenn stromabv Verpackungsanlage ein Fehler auftritt und die Verpackungen nicht mehr weiter stromabwärts verarbeitet werden können. Sobald der stromabwärtige Fehler behoben ist, können die Verpackungen von dem Speichertisch abgerufen und weiterverarbeitet werden. Durch den Speichertisch ist es möglich, die stromaufwärtigen Einrichtungen für eine gewisse Zeit weiter zu betreiben, zumindest bis der Speichertisch gefüllt ist.

Die Verwendung des Speichertisches erhöht somit die Ausfallsicherheit einer stromaufwärtigen Einrichtung bei einem Ausfall einer stromabwärtigen Einrichtung, da die stromaufwärtige Einrichtung stets noch zunächst den Speichertisch mit Verpackungen füllen kann, ehe auch sie abgeschaltet werden muss. Ist der Fehler vorher behoben, kann die stromaufwärtige Einrichtung ohne Unterbrechung ihren Betrieb fortsetzen.

Ein Speichertisch ist jedoch stets ein Kostenfaktor für eine Verpackungsanlage. Außerdem nimmt der Speichertisch wertvolle Fläche ein, welche am Produktionsstandort zur Verfügung gestellt werden muss. Nicht immer ist es möglich, alle ggf. notwendigen Speichertische auf der vorhandenen Produktionsfläche anzuordnen, so dass bisher stets Kompromisse gemacht werden mussten, zwischen welchen Einrichtungen ein Speichertisch angeordnet wurde und wo auf einen Speichertisch verzichtet werden konnte.

Aus diesem Grunde lag dem Gegenstand die Aufgabe zugrunde, einen neuartigen Speichertisch zur Verfügung zu stellen, welcher gegenüber herkömmlichen Speichertischen einen geringen Platzbedarf bei gleichzeitiger Bedienung einer Mehrzahl von Verpackungseinrichtungen hat.

Diese Aufgabe wird durch einen Speichertisch nach Anspruch 1, eine Verpackungsanlage nach Anspruch 24 sowie ein Verfahren nach Anspruch 26 gelöst.

Es ist gegenständlich erkannt worden, dass ein Speichertisch nicht nur Verpackungen in einem einzigen Komplettierungsgrad aufnehmen kann, sondern auch in voneinander verschiedenen Komplettierungsgraden. Durch die Aufnahme von Verpackungen in voneinander verschiedenen Komplettierungsgraden ist es möglich, von verschiedenen Verpackungseinrichtungen die Verpackungen mit nur einem Speichertisch aufzunehmen. So ist es mit Hilfe des gegenständlichen Speichertisches möglich, jeweils stromabwärtig von zumindest zwei Verpackungseinrichtungen eine Speichermöglichkeit für Verpackungen zur Verfügung zu stellen. Dies gelingt ohne einen zusätzlichen Flächenbedarf, da ein einziger Speichertisch Packungen unterschiedlicher Komplettierungsgrade aufnehmen kann.

Hierzu weist ein gegenständlicher Speichertisch zumindest zwei Einschleusungen auf. An den Einschleusungen werden die Verpackungen von verschiedenen Verpackungseinrichtungen dem Speichertisch zugeführt.

Darüber hinaus verfügt der gegenständliche Speichertisch über zumindest zwei Ausschleusungen. An den Ausschleusungen werden die Verpackungen vom Speichertisch entnommen. Jede der Ausschleusungen ist in der Lage, Verpackungen von dem Speichertisch auszuschleusen und einer stromabwärtigen Verpackungseinrichtung zuzuführen. Sowohl die Einschleusungen als auch die Ausschleusungen können jeweils Verpackungen in einem anderen Komplettierungsgrad verarbeiten.

Verpackungen werden von einer ersten Verpackungseinrichtung (wobei unter Verpackungseinrichtung auch eine Füllmaschine zu verstehen ist) einer ersten Einschleusung und von einer zweiten Verpackungseinrichtung einer zweiten davon getrennten Einschleusung zugeführt. Von einer ersten Ausschleusung werden die Verpackungen zumindest einer zweiten Verpackungseinrichtung zugeführt und von einer zweiten, von der ersten Ausschleusung verschiedenen Ausschleusung, werden die Verpackungen einer dritten, weiteren stromabwärtigen Verpackungseinrichtung zugeführt.

Somit bietet der Speichertisch zwei voneinander verschiedenen Verpackungseinrichtungen die Möglichkeit, Verpackungen auf den Speichertisch zu lagern.

Um zu verhindern, dass Verpackungen auf dem Speichertisch vertauscht werden, wird auch vorgeschlagen, dass eine Mehrzahl von separat voneinander bestückbaren, zwischen den Einschleusungen und den Ausschleusungen angeordneten Speicherlinien vorgesehen sind. Die Speicherlinien sind vorzugsweise Bereiche innerhalb eines Speichertisches, die jeweils Verpackungen aufnehmen. Gegenständlich werden auf einer Speicherlinie zu einem Zeitpunkt Verpackungen vorzugsweise in nur einem Komplettierungsgrad aufgenommen.

Auf einem Speichertisch können mithin jedoch Verpackungen unterschiedlicher Verpackungsgrade gleichzeitig gespeichert sein, wobei diese dann jedoch in zwei voneinander verschiedenen Speicherlinien gespeichert sein können.

Um dies zu ermöglichen wird vorgeschlagen, dass die Einschleusungen abhängig von einem Komplettierungsgrad einer Verpackung die jeweilige Verpackung einer der Speicherlinien zuführen und dass die Ausschleusungen abhängig von dem Komplettierungsgrad der Verpackung die jeweilige Verpackung der jeweiligen Speicherlinie entnehmen.

Vorzugsweise ist jeweils eine Einschleusung einer Verpackungseinrichtung bzw. einer Verpackung mit einem Komplettierungsgrad zugeordnet. Vorzugsweise ist auch eine Ausschleusung jeweils einer stromabwärtigen Verpackungseinrichtung bzw. einer Verpackung mit einem bestimmten Komplettierungsgrad zugeordnet.

Entlang der Stromflussrichtung der Verpackungen durch die Verpackungsanlage erreicht eine Verpackung zunächst in einem ersten Komplettierungsgrad den Speichertisch und wird über eine erste Einschleusung dem Speichertisch zugeführt.

Über eine erste Ausschleusung wird diese Verpackung dann vom Speichertisch entnommen und zumindest einer zweiten Verpackungseinrichtung zugeführt. Am Ausgang der zumindest einen zweiten Verpackungseinrichtung wird die Verpackung in einem zweiten Komplettierungsgrad über die zweite Einschleusung dem Speichertisch zugeführt und an der zweiten Ausschleusung wird diese Verpackung in dem zweiten Komplettierungsgrad von dem Speichertisch entnommen.

Ein Speichertisch kann dabei, wenn stromabwärtig alle Verpackungseinrichtungen einwandfrei arbeiten, die Verpackungen ohne Verzögerung weiterleiten, indem die Verpackungen über eine dezidierte Speicherlinie zunächst ohne Verzögerung von der Einschleusung zur Ausschleusung transportiert werden. Diese dezidierten Speicherlinien können auch als Bypass-Speicherlinien verstanden werden, die im Regelfall die Verpackungen jeweils nur von der Einschleusung zur Ausschleusung transportieren. Die dezidierten Speicherlinien sind bevorzugt jeweils genau einer der Einschleusungen und einer der Ausschleusungen zugeordnet.

Tritt ein stromabwärtiger Fehler auf, wird die vor, bevorzugt unmittelbar vor dem Fehler bzw. die vor, bevorzugt unmittelbar vor der fehlerhaften Verpackungseinrichtung vorgesehene Ausschleusung angewiesen, keine weiteren Verpackungen vom Speichertisch zu entnehmen. Daraufhin füllt sich zunächst die erste, vorzugsweise der Ausschleusung exklusiv zugeordnete Speicherlinie des Speichertisches, bis diese einen maximalen Füllgrad erreicht hat.

Anschließend wird von der dieser Ausschleusung zugeordneten Einschleusung der Speichertisch entlang weiterer Speicherlinien sukzessive gefüllt. Dies wird entweder solange durchgeführt, bis der Speichertisch insgesamt einen maximalen Füllgrad hat, oder der Fehler behoben ist und der Speichertisch danach entleert werden kann. Ist bis zum Zeitpunkt des Erreichens des maximalen Füllgrades der Fehler in der stromabwärtigen Verpackungseinrichtung nicht behoben, wird zumindest die unmittelbar stromaufwärtige Verpackungseinrichtung, mithin jedoch gegebenenfalls auch die gesamte Verpackungsanlage angehalten. Insbesondere werden alle dem jeweiligen Speichertisch unmittelbar zugeordneten Verpackungseinrichtungen angehalten, das heißt alle die Verpackungseinrichtungen, die unmittelbar Verpackungen den Einschleusungen zuführen oder von den Ausschleusungen beziehen.

Wird der Fehler stromabwärtig behoben, nimmt die stromabwärtige Verpackungseinrichtung ihren Betrieb wieder auf. Dadurch kann der Speichertisch sukzessive wieder gelehrt werden, indem die Ausschleusung von den zuvor gefüllten Speicherlinien die Verpackungen aufnimmt und der stromabwärtigen Verpackungseinrichtung zuführt, bis der Speichertisch gelehrt ist.

Das Zu- und Abführen der Verpackungen zum und vom Speichertisch erfolgt gegenständlich mit Transportmitteln. Solche Transportmittel sind vorzugsweise an jeder Einschleusung und an jeder Ausschleusung angeordnet. Das heißt, dass Verpackungen von dem Transportmittel über die Einschleusung auf den Speichertisch gelangen und von dem Speichertisch über die Ausschleusung auf ein Transportmittel gelangen. Mit Hilfe der Transportmittel ist eine kontinuierliche Verarbeitung von Verpackungen in Verpackungseinrichtungen entlang der Verpackungsanlage möglich, ohne dass ein manueller Eingriff notwendig wird.

Gemäß einem Ausführungsbeispiel ist jeweils eine Einschleusung einer Ausschleusung zugeordnet, wobei die Komplettierungsgrade der Verpackung an den einander zugewiesenen Einschleusungen und Ausschleusungen jeweils identisch sind.

Für einen linearen Transport der Verpackungen entlang des Speichertisches ist es vorteilhaft, wenn jeweils zumindest eine Ausschleusung und eine Einschleusung an jeweils einem von zwei einander gegenüberliegenden Enden der Speicherlinien angeordnet sind. Somit kann die Verpackung über die Einschleusung in die Speicherlinie gelangen, entlang der Speicherlinie linear bewegt werden und an der Ausschleusung von der Speicherlinie wieder entnommen werden. Eine Umkehrung der Transportrichtung auf der Speicherlinie entfällt somit für die jeweilige Verpackung.

Eine besonders einfache Anordnung der Verpackungseinrichtungen um den Speichertisch herum ist dann möglich, wenn an einem ersten Ende des Speichertisches eine erste Einschleusung angeordnet ist, an einem diesem Ende gegenüberliegenden Ende des Speichertisches eine erste Ausschleusung angeordnet ist, die der ersten Einschleusung zugeordnet ist und zusätzlich eine zweite Einschleusung. An dem Ende des Speichertisches an dem die erste Einschleusung angeordnet ist, kann dann die zweite Ausschleusung vorgesehen sein, die der zweiten Einschleusung zugeordnet ist. Die Verpackung läuft somit in einem ersten Verpackungsgrad von der ersten Einschleusung entlang einer ersten Transportrichtung zu der ersten Ausschleusung. Von dort läuft die Packung über zumindest eine weitere Verpackungseinrichtung und erhält einen weiteren Komplettierungsgrad. Dann läuft die Verpackung über die zweite Einschleusung auf den Speichertisch. Dort wird die Verpackung in einer entgegengesetzten Richtung zu der ersten Transportrichtung, welche die Verpackung zuvor auf dem Speichertisch genommen hat, transportiert und zu der zweiten Ausschleusung bewegt.

Gemäß einem Ausführungsbeispiel wird vorgeschlagen, dass die Komplettierungsgrade an zumindest zwei der Einschleusungen voneinander verschieden sind. Wie bereits erläutert, ist der Speichertisch als Speicher für zumindest zwei Verpackungseinrichtungen gedacht. Das heißt, der Speichertisch kann von der ersten Verpackungseinrichtung Verpackungen aufnehmen und auch von der zweiten Verpackungseinrichtung, in welcher die Verpackungen der ersten Verpackungseinrichtung weiter verarbeitet werden. Insofern können dann die Komplettierungsgrade an den jeweiligen Einschleusungen unterschiedlich sein.

Zum Transport der jeweiligen Verpackungen sind entlang der jeweiligen Speicherlinien jeweils Transportmittel vorgesehen. Die Transportmittel sind dazu eingerichtet, die Verpackungen in verschiedenen Komplettierungsgraden aufzunehmen. Hierzu können die Transportmittel der jeweiligen Speicherlinien so ausgestaltet sein, dass sie Verpackungen auch in unterschiedlichen Gebindegrößen oder Ausrichtungen aufnehmen können. Insbesondere können die Linienbreiten der Speicherlinien variabel gestaltet sein.

Auch wird vorgeschlagen, dass Transportmittel die Verpackungen in jeweils verschiedenen Komplettierungsgraden der jeweiligen Einschleusung zuführen. Solche Transportmittel sind mit dem Speichertisch verbunden und Empfangen von einer Verpackungseinrichtung Verpackungen mit einem Komplettierungsgrad und transportieren diese dann zu der jeweiligen Einschleusung. Zwischen einer Verpackungseinrichtung und einer Einschleusung können die Transportmittel jeweils angepasst an den Komplettierungsgrad einer Verpackung sein.

Auch wird vorgeschlagen, dass ausgangsseitig eines Speichertisches, also an der Ausschleusung, jeweils ein Transportmittel vorgesehen ist. Ein solches Transportmittel nimmt dann Verpackungen in einem bestimmten Komplettierungsgrad auf. Transportmittel an unterschiedlichen Einschleusungen bzw. unterschiedlichen Ausschleusungen können jedoch für Verpackungen mit unterschiedlichen Komplettierungsgraden ausgelegt sein.

Gemäß einem Ausführungsbeispiel wird vorgeschlagen, dass die Einschleusungen jeweils zumindest ein Bestückungsmittel aufweisen und/oder dass die Bestückungsmittel der jeweiligen Einschleusung getrennt voneinander betrieben sind.

Von der Einschleusung aus müssen die Verpackungen einer jeweiligen Speicherlinie zugeführt werden. Auf einem Speichertisch sind die Speicherlinien vorzugsweise nebeneinander angeordnet. Die Einschleusung ist mit dem Transportmittel verbunden, auf dem die Verpackungen in der Regel in einer Linearbewegung dem Speichertisch zugeführt werden. Um die zugeführten Verpackungen dann jedoch auf die einzelnen Speicherlinien aufteilen zu können, ist es notwendig, die Bewegungsrichtung der Verpackungen zu variieren, insbesondere von dem Transportmittel zu der jeweiligen Speicherlinie, welche aktuell benutzt wird. Hierzu sind jeweils Bestückungsmittel vorgesehen. An jeder Einschleusung kann ein Bestückungsmittel vorgesehen sein, was die Verpackungen unabhängig von den jeweils anderen Bestückungsmitteln auf die jeweilige Speicherlinie transportiert. Die Bestückungsmittel können sogenannte Satelliten oder Umlenker sein, welche dafür sorgen, dass die von dem Transportmittel zugeführten Verpackungen der jeweils richtigen Speicherlinie zugeführt werden.

An der Einschleusung nehmen die Bestückungsmittel die Verpackungen auf und lenken diese so um, dass diese in einer Speicherlinie aufgenommen werden können. Durch die Bestückungsmittel ist es möglich, von einem einzigen Transportmittel stammende Verpackungen verschiedenen Speicherlinien sequenziell nacheinander zuzuführen.

Um sicherzustellen, dass an einer Ausschleusung von einer Speicherlinie jeweils Verpackungen nur in einem einzigen Komplettierungsgrad entnommen werden, insbesondere so dass sie geeignet sind für die der Ausschleusung stromabwärts nachgeordneten Verpackungseinrichtung, wird vorgeschlagen, dass die Bestückungsmittel jeweils einer Speicherlinie jeweils nur Verpackungen mit einem gleichen Komplettierungsgrad zuführen. Auf dem Speichertisch sind nebeneinander eine Mehrzahl von Speicherlinien angeordnet. Die Bestückungsmittel sind so eingerichtet, dass jeweils einer Speicherlinie Verpackungen in nur jeweils einem Komplettierungsgrad zugeführt werden. Somit wird sichergestellt, wenn die Speicherlinie gelehrt wird, dass alle Verpackungen auf der Speicherlinie den gleichen Komplettierungsgrad haben und an der Ausschleusung einer richtigen Verpackungseinrichtung zugeführt werden können.

Gemäß einem Ausführungsbeispiel wird vorgeschlagen, dass die Ausschleusung jeweils zumindest ein Entnahmemittel aufweisen. Die Entnahmemittel funktionieren vorzugsweise korrespondierend zu den Bestückungsmitteln, so dass auf die Ausführungen zu den Bestückungsmitteln jeweils verwiesen wird.

Um Verpackungen in unterschiedlichen Komplettierungsgraden von unterschiedlichen Speicherlinien des Speichertisches unterschiedlichen Ausschleusungen zuführen zu können, wird vorgeschlagen, dass die Entnahmemittel getrennt voneinander betrieben sind. Jedes einzelne Entnahmemittel kann somit individuell einer Speicherlinie zugewiesen werden, so dass die auf dieser Speicherlinie gespeicherten Verpackungen ausschließlich einer bestimmten Ausschleusung und einem bestimmten Transportmittel zugeführt werden können.

Gemäß einem Ausführungsbeispiel wird vorgeschlagen, dass die Entnahmemittel die Verpackungen an der Ausschleusung zwischen einer der Speicherlinien und dem jeweiligen Transportmittel transportieren. Wird eine Speicherlinie gelehrt, so werden die Verpackungen am Ende der Speicherlinie kontinuierlich zur Verfügung gestellt. Über die Entnahmemittel werden diese Verpackungen dann zu dem jeweiligen Transportmittel transportiert und von dort zu der stromabwärtigen Verpackungseinrichtung.

So wie die Bestückungsmittel die Speicherlinien mit jeweils nur Verpackungen eines gleichen Komplettierungsgrades bestücken, so entnehmen die Entnahmemittel von jeweils einer Speicherlinie auch nur Verpackungen mit einem gleichen Komplettierungsgrad gemäß einem Ausführungsbeispiel.

Gemäß einem Ausführungsbeispiel wird vorgeschlagen, dass die Entnahmemittel und/oder die Bestückungsmittel als linear betriebene Satelliten gebildet sind, die quer, vorzugsweise senkrecht zu den Speicherlinien bewegt sind und die Verpackungen jeweils eine Speicherlinie zuweisen. Vorzugsweise können auch Umlenker vorgesehen sein, die quer zu den Speicherlinien bewegt sind, um ausgehend von einem Transportmittel die Verpackungen entlang ihrer Transportrichtung so umzulenken, dass diese zu der richtigen Speicherlinie bewegt werden.

Auch schwenkbar betriebene Bänder sind denkbar, wobei durch das Verschwenken ausgehend von dem Transportband zwischen den Speicherlinien unterschieden werden kann.

Gemäß einem Ausführungsbeispiel wird vorgeschlagen, dass die Speicherlinien ein Transportmittel aufweisen. Mit Hilfe der Transportmittel können die Verpackungen entlang einer Speicherlinie zwischen der Einschleusung und der Ausschleusung bzw. zwischen den Bestückungsmitteln und den Entnahmemitteln transportiert werden. Die Transportmittel weisen insbesondere Transportbänder oder Transportgurte auf. Dasselbe gilt natürlich auch für die Transportmittel, welche eingangsseitig der Einschleusung und ausgangsseitig der Ausschleusungen angeordnet sind und zuvor beschrieben wurden.

Gemäß einem Ausführungsbeispiel wird vorgeschlagen, dass die Speicherlinien jeweils von zumindest zweien der Bestückungsmitteln bedarfsweise bestückbar sind. Die Bestückungsmittel können gleiche Speicherlinien bestücken. Dies ist jedoch nur in zeitlicher Abfolge möglich. Insofern kann eine Speicherlinie zu einem Zeitpunkt nur von einem Bestückungsmittel bestückt werden. Das andere Bestückungsmittel kann diese Speicherlinie so lange nicht bestücken, bis von dem Entnahmemittel die Speicherlinie vollständig entleert worden ist. Somit wird vorgeschlagen, dass eine Speicherlinie in zeitlicher Abfolge zunächst Verpackungen in einem ersten Komplettierungsgrad von einem ersten Bestückungsmittel aufnimmt und anschließend Verpackungen in einem zweiten von dem ersten verschiedenen Komplettierungsgrad von einem zweiten Bestückungsmittel. Dabei ist vorgeschlagen, dass die Speicherlinie, nachdem sie von einem ersten Bestückungsmittel mit Verpackungen in einem ersten Komplettierungsgrad bestückt wurde zunächst vollständig entleert wird, ehe anschließend diese Speicherlinie mit Verpackungen in einem zweiten Komplettierungsgrad von einem zweiten Bestückungsmittel bestückt wird.

Gemäß einem Ausführungsbeispiel wird vorgeschlagen, dass zumindest zwei der Speicherlinien jeweils von zumindest zweien der Bestückungsmittel zeitgleich bestückbar sind. Das heißt, dass zwei voneinander verschiedene Speicherlinien zu einem Zeitpunkt gleichzeitig von zwei Bestückungsmitteln zeitgleich bestückt werden können.

Insbesondere ist bei der zeitgleichen Bestückung der Komplettierungsgrad je nach Bestückungsmittel verschieden, so dass der Speichertisch gleichzeitig Verpackungen unterschiedlicher Komplettierungsgrade in unterschiedlichen Speicherlinien aufnehmen kann.

Gemäß einem Ausführungsbeispiel ist auf dem Speichertisch eine Mehrzahl nebeneinander angeordneter Speicherlinien vorgesehen. Je mehr Speicherlinien nebeneinander angeordnet worden sind, desto größer ist die Speicherkapazität des Speichertisches und die Ausfallwahrscheinlichkeit der Verpackungsanlage wird reduziert.

Gemäß einem Ausführungsbeispiel wird vorgeschlagen, dass zumindest zwei Bestückungsmittel an den Speicherlinien angeordnet sind und dass die Bestückungsmittel jeweils exklusiv einer von zwei, vorzugsweise einander gegenüberliegenden Speicherlinien zugeordnet sind.

Vorzugsweise hat jedes Bestückungsmittel eine exklusiv ihm zugeordnete Speicherlinie. Über diese exklusiv zugeordnete Speicherlinie laufen zunächst die Verpackungen von der Einschleusung zur Ausschleusung ohne Unterbrechung. Im fehlerfreien Betreib laufen somit über den Speichertisch über zwei Speicherlinien jeweils Verpackungen unterschiedlicher Verpackungsgrade von einer jeweiligen Einschleusung zu einer jeweiligen Ausschleusung. Die exklusiv jeweils einem der Bestückungsmittel bzw. einer der Einschleusungen bzw. einem der Entnahmemittel bzw. einer der Ausschleusungen zugeordneten Speicherlinien sind vorzugsweise an den äußeren Enden des Speichertisches vorgesehen.

Kommt es zum Fehlerfall, wird stromaufwärtig der fehlerhaften Verpackungseinrichtung die Ausschleusung unterbrochen. Der Speichertisch füllt sich ausgehend von dieser Ausschleusung. Sobald eine Speicherlinie gefüllt ist, wird die nächste Speicherlinie gefüllt. Welches die nächste Speicherlinie ist, die gefüllt wird, kann variabel gestaltet sein. Insbesondere ist es möglich, dass ausgehend von der exklusiv dem Bestückungsmittel zugeordneten Speicherlinie jeweils eine benachbarte Speicherlinie bestückt wird. Auch kann es sinnvoll sein, dass ausgehend von der exklusiv dem Bestückungsmittel zugeordneten Speicherlinie die nachfolgenden Speicherlinien alternierend bestückt werden. Alternierend kann dabei bedeuten, dass zumindest zwischen zwei zu bestückenden Speicherlinien jeweils eine Speicherlinie unbestückt bleibt. Auch können mehr als eine Speicherlinie zwischen zwei bestückten Speicherlinien unbestückt bleiben. Die Bestückung erfolgt so zunächst alternierend von Speicherlinie zu Speicherlinie, bis ein Ende des Speichertisches erreicht ist oder eine bestimmte Grenze auf dem Speichertisch, bis zu der das jeweilige Bestückungsmittel bestücken darf. Anschließend werden die dabei ausgelassenen Speicherlinien in umgekehrter Reihenfolge bestückt, bis der Speichertisch vollständig gefüllt ist.

Die Grenze, bis zu der das Bestückungsmittel bestücken darf kann festgelegt sein, z.B. bis zur Hälfte aller Speicherlinien, oder sie kann variabel sein. Die Grenze kann z.B. dynamisch aus den vergangenen Fehlerwahrscheinlichkeiten der stromabwärtigen Verpackungseinrichtungen berechnet werden. Die Grenze kann z.B. aus dem Quotienten aus der Fehlerwahrscheinlichkeit an den Verpackungseinrichtungen zwischen erster Ausschleusung und zweiter Einschleusung zu der Fehlerwahrscheinlichkeit an den Verpackungseinrichtungen an der zweiten Ausschleusung berechnet werden.

Wann die Bestückung einer Speicherlinie beendet wird und eine nächste Speicherlinie bestückt wird, kann gemäß einem bevorzugten Ausführungsbeispiel durch Erreichen eines definierten Füllgrades bestimmt sein. Wenn eine Speicherlinie einen bestimmten Füllgrad erreicht hat, wandert das Bestückungsmittel zu einer nächsten Speicherlinie, die vorzugsweise benachbart oder alternierend zumindest die übernächste Speicherlinie ist.

Der Speichertisch kann sowohl ein vertikaler als auch ein horizontaler Speichertisch sein.

Bei einem Auffüllen des Speichertisches ist es notwendig, dass sobald die stromabwärtigen Verpackungseinrichtungen fehlerfrei arbeiten, der Speichertisch auch wieder entleert werden kann. Dies ist vorzugsweise dann möglich, wenn die Verarbeitungsrate einer Verpackungseinrichtung stromabwärtig größer ist als die Verarbeitungsrate einer Verpackungseinrichtung stromaufwärtig. Somit ist stromabwärtig eine Steigerung der Verarbeitungsraten der Verpackungseinrichtungen bevorzugt, so dass der Speichertisch nach einem zumindest teilweise Befüllen auch wieder entleert werden kann, ohne dass die stromaufwärtige Verpackungseinrichtung ihre Verarbeitungsrate reduzieren müsste. Es hat sich gezeigt, dass zumindest eine 20 %ig höhere Verarbeitungsrate einer Verpackungseinrichtung als die Verarbeitungsrate einer stromaufwärtig vorgelagerten Verpackungseinrichtung zu einem ausreichend schnellen Entleeren des Speichertisches führt.

Nachfolgend wird der Gegenstand anhand einer Ausführungsbeispiele zeigenden Zeichnung näher erläutert. In der Zeichnung zeigen:
- Fig. 1: eine schematische Ansicht einer Verpackungsanlage mit Verpackungseinrichtungen;
- Fig. 2: einen schematischen Verlauf eines Füllgrads eines Speichertisches;
- Fig. 3: eine schematische Ansicht einer gegenständlichen Verpackungsanlage mit einem gegenständlichen Speichertisch;
- Fig. 4a): eine Verpackung in einem ersten Komplettierungsgrad;
- Fig. 4b): eine Verpackung in einem zweiten Komplettierungsgrad;
- Fig. 5: einen Speichertisch gemäß einem Ausführungsbeispiel;
- Fig. 6: einen Speichertisch nach Fig. 5 in Betrieb;
- Fig. 7: einen Speichertisch nach Fig. 5 in einem ersten Fehlerfall;
- Fig. 8: einen Speichertisch nach Fig. 7 kurz nach Beendigung des Fehlerfalls;
- Fig. 9: einen Speichertisch nach Fig. 5 in einem zweiten Fehlerfall;
- Fig. 10: einen Speichertisch nach Fig. 9 kurz nach Beendigung des Fehlerfalls;
- Fig. 11: einen zweiten Speichertisch gemäß einem Ausführungsbeispiel;
- Fig. 12: einen Speichertisch nach Fig. 11 in einem ersten Fehlerfall;
- Fig. 13: ein Bestücksmittel gemäß einem Ausführungsbeispiel;
- Fig. 14: verschiedene Bearbeitungsraten von verschiedenen Verpackungseinrichtungen nach einem Ausführungsbeispiel.

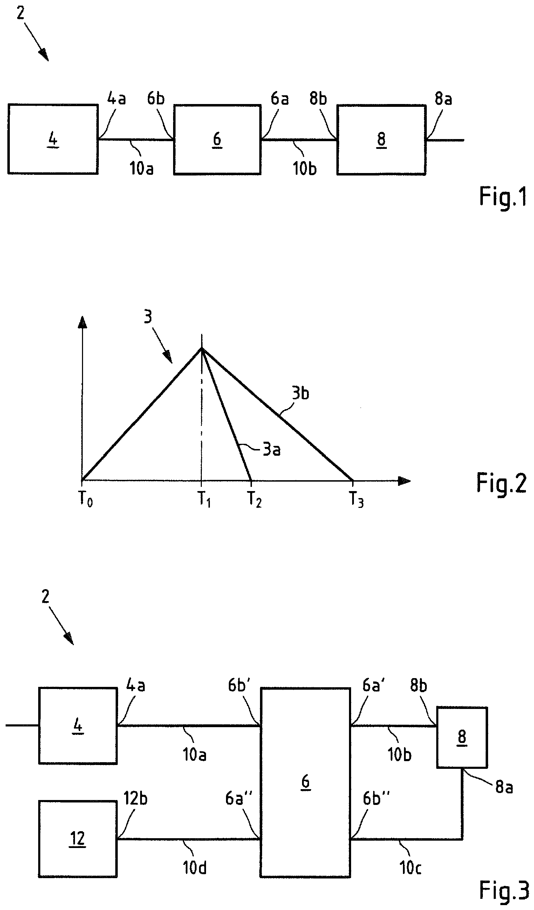

Fig. 1 zeigt eine Verpackungsanlage 2 mit einer Füllmaschine 4 als erste Verpackungseinrichtung, einem Speichertisch 6 und einem Strohhalm-Applikator 8 als zweite Verpackungseinrichtung. Die Füllmaschine 4 hat eine Ausschleusung 4a. Aus der Ausschleusung 4a werden Verpackungen, beispielsweise Getränkekartons oder dergleichen, vorzugsweise im verschlossenen Zustand, auf ein Transportband 10a oder einen Transportgürtel gegeben. Über das Transportband 10a werden die Verpackungen einer Einschleusung 6b des Speichertisches 6 zugeführt.

Ausgangsseitig des Speichertisches 6 ist eine Ausschleusung 6a vorgesehen, über die die auf dem Speichertisch 6 zwischengespeicherten Verpackungen ausgeschleust werden.

An der Ausschleusung 6a ist ein zweites Transportband 10b vorgesehen, welches die Verpackungen dem Strohhalm-Applikator 8 zuführen. Eingangsseitig des Strohhalm-Applikators 8 ist eine Einschleusung 8b vorgesehen. Ausgangsseitig des Strohhalm-Applikators 8 ist eine Ausschleusung 8a vorgesehen. Die mit dem Strohhalm applizierten Verpackungen werden an der Ausschleusung 8a vom Strohhalm-Applikator 8 ausgegeben.

Die gezeigte Verpackungsanlage 2 ist rein beispielhaft und die Reihenfolge und Anordnung von Füllmaschine 4, Speichertisch 6 und Strohhalm-Applikator 8 können variiert werden. Gegenständlich sind jedoch eine Füllmaschine 4, ein Strohhalm-Applikator 8, ein Schrumpffolien-Applikator oder dergleichen allesamt als Verpackungseinrichtungen einer Verpackungsanlage 2 zu verstehen.

Der Speichertisch 6 dient zur Zwischenspeicherung von durch die Füllmaschine 4 zur Verfügung gestellten Verpackungen. Der Strom der Verpackungen ist stromabwärtig gesehen ausgehend von der Füllmaschine 4 über das Transportband 10a, den Speichertisch 6, das Transportband 10b zum Strohhalm-Applikator 8.

Tritt stromabwärtig des Speichertisches 6 ein Fehler auf, insbesondere im Bereich des Strohhalm-Applikators 8, sollten die Verpackungen nicht mehr dem Strohhalm-Applikator 8 zugeführt werden. Um zu verhindern, dass die Füllmaschine 4 heruntergefahren werden muss, ist der Speichertisch 6 vorgesehen. Über die Einschleusung 6b können Verpackungen auf den Speichertisch 6 eingeschleust werden, während an der Ausschleusung 6a keine weiteren Verpackungen mehr ausgegeben werden. Dies ist solange möglich, bis die Speicherkapazität des Speichertisches 6 erreicht ist. Während dieser Zeit aber kann die Füllmaschine 4 weiter Verpackungen ausgeben. Die Zeit, die durch den Speichertisch 6 zur Verfügung gestellt wird, kann zur Behebung des Problems am Strohhalm-Applikator 8 genutzt werden. Sobald der Strohhalm-Applikator 8 wieder funktionsfähig ist, können Verpackungen über die Ausschleusung 6a und das Transportband 10b dem Strohhalm-Applikator 8 wieder zugeführt werden.

Das Auffüllen bzw. den Füllgrad des Speichertisches 6 bei einem Fehler stromabwärtig des Speichertisches ist in Fig. 2 aufgetragen. Fig. 2 zeigt den Verlauf 3 des Füllgrades eines Speichertisches 6 über die Zeit. Zu einem Zeitpunkt T0 tritt ein Fehler stromabwärtig des Speichertisches 6 auf. Die Verpackungen laufen über die Einschleusung 6b von der Füllmaschine 4 nach wie vor in den Speichertisch 6 und dessen Füllgrad erhöht sich bis zu einem Zeitpunkt T1.

Zum Zeitpunkt T1 ist der Fehler am Strohhalm-Applikator 8 behoben und der Speichertisch 6 kann über die Ausschleusung 6a Verpackungen wieder ausgeben.

Um den Füllgrad des Speichertisches 6 danach zu verringern, während gleichzeitig weiterhin Verpackungen in unveränderter Rate über die Einschleusung 6b eingeschleust werden, ist es notwendig, dass stromabwärtig des Speichertisches 6 die Verarbeitungsrate höher ist, als die Verarbeitungsrate stromaufwärtig des Speichertisches. Ansonsten könnte der Speichertisch 6 nicht leerlaufen.

In der Fig. 2 sind zwei verschiedene Verläufe 3a, 3b des Füllstandes des Speichertisches 6 bei verschiedenen Verarbeitungsraten stromabwärtig des Speichertisches 6 aufgezeichnet. Bei einer nur gering höheren Verarbeitungsrate des Strohhalm-Applikators 8 als der der Füllmaschine 4 verläuft der Füllstand entsprechend der Kurve 3b und es dauert es bis zum Zeitpunkt T3, bis der Speichertisch 6 leergelaufen ist.

Je höher die Verarbeitungsrate der stromabwärtigen Verarbeitungseinrichtung ist, desto kürzer ist die Zeit, bis der Speichertisch 6 leergelaufen ist. Dies ist in der Fig. 2 durch die Kurve 3b dargestellt, die den Füllstandsverlauf bei gegenüber Kurve 3a erhöhter Verarbeitungsrate der stromabwärtigen Verpackungseinrichtung zeigt. Der Speichertisch 6 ist dann bereits zum Zeitpunkt T3 leer gelaufen. Die beiden Verläufe 3a, 3b des Füllgrades des Speichertisches 6 zeigen, dass die Zeit. bis der Speichertisch 6 leer gelaufen ist, variabel und abhängig von den Verarbeitungsraten der vom Speichertisch 6 stromabwärtigen Verpackungseinrichtung 8 ist.

Es ist erkannt worden, dass ein Speichertisch 6 in der Regel, das heißt im fehlerfreien Betrieb, nicht genutzt wird. Ferner ist erkannt worden, dass die Investitionskosten für einen Speichertisch 6 erheblich sind und außerdem ein Speichertisch 6 erheblichen Platzbedarf hat. Um den Nutzen eines Speichertisches 6 zu erhöhen, wird nun gegenständlich, wie schematisch in Fig. 3 dargestellt, eine Doppelnutzung des Speichertisches 6 vorgeschlagen.

Fig. 3 zeigt eine Verpackungsanlage 2 nach einem Ausführungsbeispiel. Zu erkennen ist in der Fig. 3 die Füllmaschine 4, der Speichertisch 6, der Strohhalm-Applikator 8 sowie eine weitere Verpackungseinrichtung 12. Nachfolgend werden alle drei nur noch stellvertretend als Verpackungseinrichtungen bezeichnet, da es gegenständlich nicht auf die Art der Verpackungseinrichtungen ankommt.

Der Speichertisch 6 hat eine erste Einschleusung 6b' sowie eine zweite Einschleusung 6b". Darüber hinaus hat der Speichertisch 6 eine erste Ausschleusung 6a' und eine zweite Ausschleusung 6a". Von der ersten Verpackungseinrichtung 4 verläuft ein Transportband 10a zu der ersten Einschleusung 6b'. Von der ersten Ausschleusung 6a' verläuft ein Transportband 10b zu der Verpackungseinrichtung 8 über eine Einschleusung 8b. Von einer Ausschleusung 8a verläuft ein drittes Transportband 10c zu der zweiten Einschleusung 6b" und von der zweiten Ausschleusung 6a" verläuft ein Transportband 10d zu einer Einschleusung 12b der Verpackungseinrichtung 12.

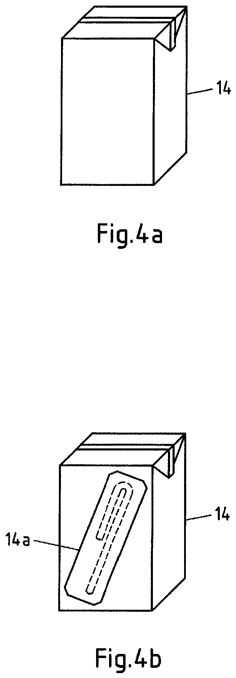

An der Ausschleusung 4a der Verpackungseinrichtung 4 haben die Verpackungen 14 einen ersten Komplettierungsgrad. Dieser erste Komplettierungsgrad ist beispielhaft in der Fig. 4a dargestellt. Die Fig. 4a zeigt eine Verpackung 14 für flüssige Lebensmittel, beispielsweise eine Getränkeverpackung im geschlossenen Zustand, die von der Verpackungseinrichtung 4 ausgegeben wird.

Stromabwärtig verläuft diese Verpackung 14 nun wie in Fig. 3 dargestellt, über das Transportband 10a, die Einschleusung 6b', die Ausschleusung 6a' und das Transportband 10b zu der Verpackungseinrichtung 8. In der Verpackungseinrichtung 8 wird der Komplettierungsgrad der Verpackung 14 verändert, beispielsweise durch Applizieren eines Strohhalms. Diese so weiter verarbeitete Verpackung 14 wird durch die Verpackungseinrichtung 8 an der Ausschleusung 8a ausgegeben und hat beispielhaft die Form, wie sie in der Fig. 4b dargestellt ist. Zu erkennen ist, dass durch Applizieren des Strohhalms 14a an der Verpackung 14 der Komplettierungsgrad verändert ist.

Die so weiter verarbeitete Verpackung 14 wird über das Transportband 10c der zweiten Einschleusung 6b" zugeführt und über den Speichertisch 6 zur zweiten Ausschleusung 6a" geführt. Von dort wird die Verpackung 14 weiter stromabwärtig über das Transportband 10d zu der Verpackungseinrichtung 12 bzw. deren Einschleusung 12b transportiert.

Gegenständlich ist nun erkannt worden, dass der Speichertisch 6 durch die zwei Einschleusungen 6b', 6b" und die diesen jeweils zugeordneten Ausschleusungen 6a' bzw. 6a" effizienter genutzt werden kann. Im Falle eines stromabwärtigen Fehlers an der Ausschleusung 6a', beispielsweise wenn zumindest eine zwischen der ersten Ausschleusung 6a' und der zweiten Einschleusung 6b' angeordnete Verpackungseinrichtung 8 fehlerhaft arbeitet, kann die Ausschleusung der Verpackungen 14 an der ersten Ausschleusung 6a' unterbrochen werden.

Verpackungen 14 laufen über die Einschleusung 6b' auf den Speichertisch 6 und werden dort sukzessive auf Speicherlinien 16 verteilt. Das heißt, dass Verpackungen 14 über die Einschleusung 6b' jeweils einer Speicherlinie 16 zugeführt werden, bis diese gefüllt ist. Solange der Fehler in der Verpackungseinrichtung 8 nicht behoben ist und die Ausschleusung 6a' blockiert bleibt, werden die Verpackungen nachfolgend auf weitere Speicherlinien 16 verteilt, bis der Speichertisch 6 gefüllt ist oder ein definierter Füllgrad erreicht ist.

Sobald der Fehler in der Speichereinrichtung 8 behoben ist, werden die Verpackungen 14 über die Ausschleusung 6a' aus dem Speichertisch 6 wieder ausgeschleust und der Speichertisch 6 wird geleert. Dies ist dadurch möglich, dass die Verarbeitungsrate der zwischen der Ausschleusung 6a' und der Einschleusung 6b" angeordneten Verpackungseinrichtungen 8 höher ist, als die der Verpackungseinrichtung 4. Somit laufen weniger Verpackungen 14 auf den Speichertisch 6 auf, als diese von der Verpackungseinrichtung 8 aufgenommen werden können, so dass der Speichertisch 6 nach und nach geleert werden kann.

Das gleiche funktioniert auch bei einem stromabwärtigen Fehler an der Ausschleusung 6a". Dies kann beispielsweise dann notwendig sein, wenn die Verpackungseinrichtung 12 fehlerhaftet arbeitet. An der Ausschleusung 6a" werden dann keine Verpackungen 14 mehr ausgeschleust und der Speichertisch 6 wird eingehend von der Einschleusung 6b" gefüllt.

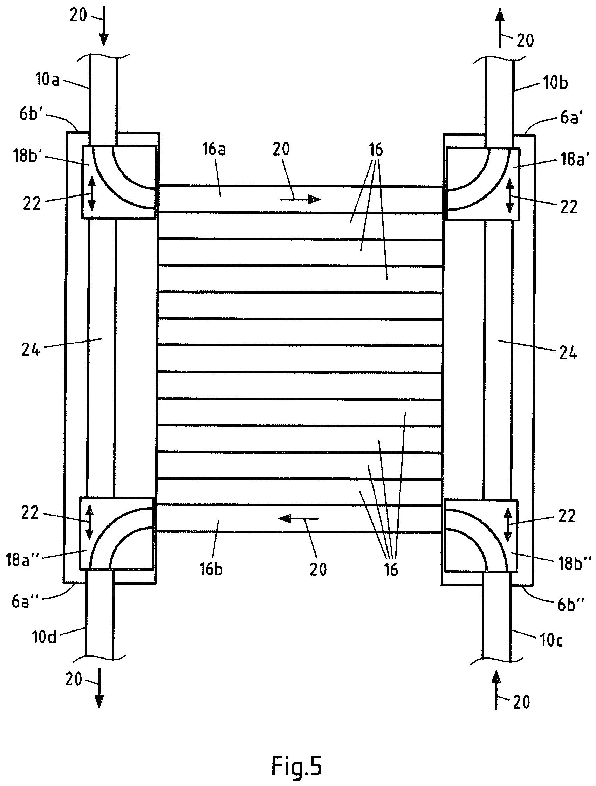

Ein Speichertisch 6 im Sinne des Gegenstandes ist beispielsweise in Fig. 5 dargestellt. Fig. 5 zeigt einen Speichertisch 6 mit einer Mehrzahl an Speicherlinien 16, wobei die jeweils an den Enden des Speichertisches 6 einander gegenüberliegenden Speicherlinien 16a, 16b mit Bezugszeichen versehen sind.

An der Einschleusung 6b' ist ein erster Satellit 18b' angeordnet. An der Ausschleusung 6a' ist ein weiterer Satellit 18a' angeordnet. An der Einschleusung 6b" ist ein weiterer Satellit 18b" angeordnet und an der Ausschleusung 6a" ist ein Satellit 18b" angeordnet.

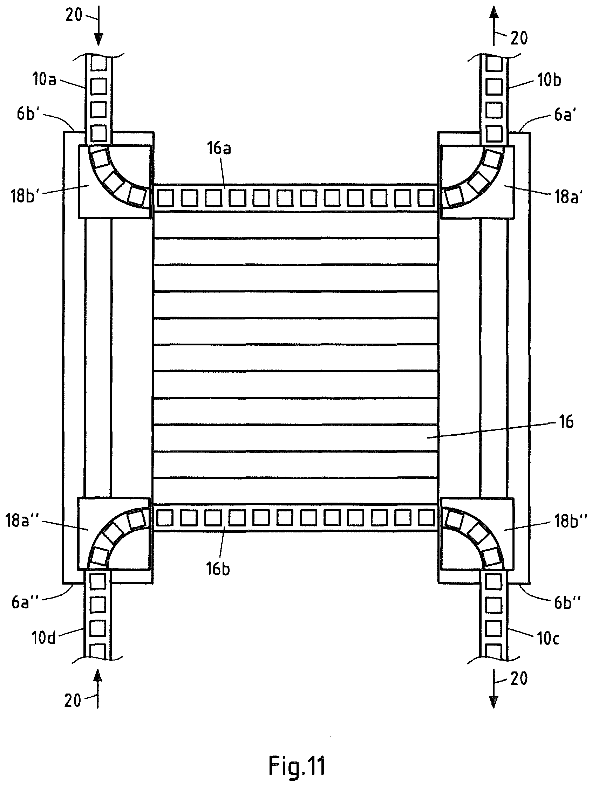

In Fig. 5 ist zu erkennen, dass an jeder Seite des Speichertischs 6 jeweils eine Einschleusung 6b' bzw. 6b" sowie eine Ausschleusung 6a' bzw. 6a" angeordnet ist. Das heißt, dass auf einer Seite eines Speichertischs 6 sowohl eine Einschleusung als auch eine Ausschleusung vorgesehen sein kann. Wie nachfolgende in Fig. 11 angedeutet, ist es auch möglich, dass an jeder Seite eines Speichertisches 6 jeweils zwei Einschleusungen bzw. zwei Ausschleusungen vorgesehen sind.

In der Fig. 5 ist die Stromflussrichtung der Verpackungen 14 entlang des Speichertisches 16 durch Pfeile 20 angedeutet. In Stromflussrichtung fließen die Verpackungen 14 von dem Transportband 10a über den Satelliten 18b' und die Speicherlinie 16a zu dem Satelliten 18a' und dem Transportband 10b. Nach einer Verarbeitung der Verpackung 14 in einen weiteren Komplettierungsgrad gelangen die Verpackungen 14 stromabwärts über das Transportband 10c und den Satelliten 18b" auf die Speicherlinie 16b. Von dort gelangen die Verpackungen über den Satelliten 18b" zu dem Transportband 10d.

An den Speicherlinien 16 sind jeweils Transportbänder 24 vorgesehen, mit denen die Verpackungen wahlweise in Richtung der einen oder der anderen Seite des Speichertisches 6 entlang der Speicherlinien 16 bewegt werden können. Hierdurch ist es möglich, die Verpackung 14 zwischen den Satelliten 18b' und 18a' bzw. den Satelliten 18b" und 18a" zu bewegen. Die Satelliten 18 werden dabei entlang der Richtungen 22 linear bewegt.

Die Breite der Speicherlinien 16 ist variabel, insbesondere wenn in den verschiedenen Komplettierungsgraden der Verpackungen 14 die Verpackungsbreiten sich verändern oder in einem Komplettierungsschritt aus einer Verpackung 14 ein Bündel von mehreren Verpackungen 14 erstellt wird, welches Bündel dann auf dem Speichertisch 6 zwischengelagert werden soll.

Die Satelliten 18 sind entlang der Richtung 22 linear beweglich. Das heißt, dass die Satelliten 18 mittels einer Linearbewegung von Speicherlinie 16 zu Speicherlinie 16 bewegt werden können.

Darüber hinaus ist zwischen den Satelliten 18b', 18a" bzw. 18a' bzw. 18b" jeweils das Transportband 24 vorgesehen, über welches die Verpackungen 14 wahlweise in die eine oder die andere Richtung 22 bewegt werden können.

Die Satelliten 18 sind unabhängig voneinander bewegbar, so dass jeder einzelne Satellit 18 jeweils eine Speicherlinie 16 unabhängig von der Position eines anderen Satelliten 18 ansteuern kann.

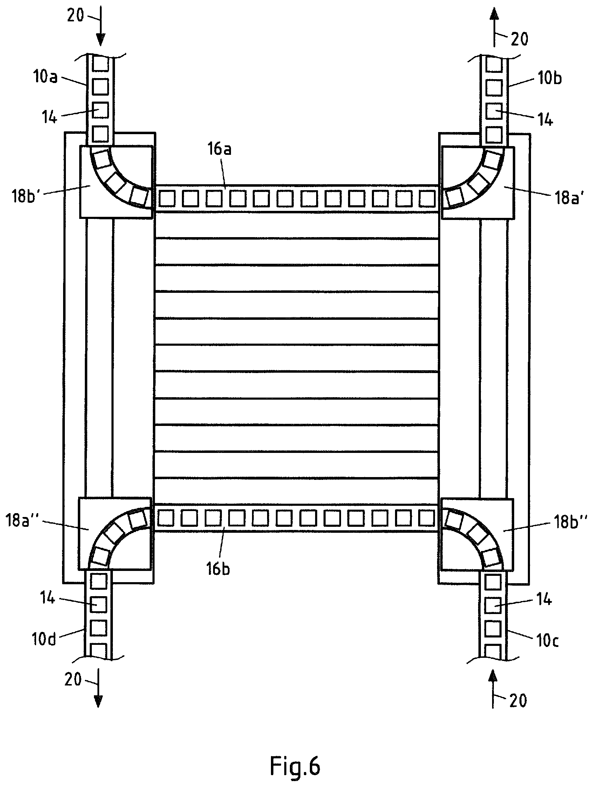

Die Funktion des Speichertisches 6 gemäß Fig. 5 im Normalbetrieb ist in der Fig. 6 dargestellt. Verpackungen 14 laufen über das Transportband 10a in den Satelliten 18b' ein und werden dort umgelenkt auf die Speicherlinie 16a. In der Speicherlinie 16a werden die Verpackungen 14 mittels eines Transportbands in Richtung des Satelliten 18a' bewegt. Dort werden die Verpackungen 14 erneut aufgenommen, umgelenkt auf das Transportband 10b bewegt.

Weiter verarbeitete Verpackungen 14, in einem anderen Komplettierungsgrad als auf den Transportbändern 10a, 10b, gelangen über das Transportband 10c zum Satelliten 18b". Der Satellit 18b" lenkt die Verpackungen 14 um auf die Speicherlinie 16b. Das dort angeordnete Transportband transportiert die Verpackungen 14 zu dem Satelliten 18a", welcher die Verpackungen umlenkt und auf das Transportband 10d gibt.

In diesem Zustand sind die Speicherlinien 16a und 16b jeweils einem Paar aus erster Einschleusung 18b' und erster Ausschleusung 18a' bzw. zweiter Einschleusung 18b" und zweiter Ausschleusung 18a" zugeordnet. Diese Zuordnung kann exklusiv sein, so dass Verpackungen 14 auf die Speicherlinie 16a nur von dem Satelliten 18b' gegeben werden können und nur von dem Satelliten 18a' abgenommen werden können.

Dasselbe gilt für die Speicherlinie 16b, die nur von den Satelliten 18b" und 18a" bedient werden kann.

Alle anderen Speicherlinien 16 zwischen den Speicherlinien 16a und 16b können von den Satelliten 18 wahlweise bestückt oder entleert werden. Die Satelliten 18b', 18b" können als Bestückungsmittel verstanden werden und die Satelliten 18a', 18a" als Entnahmemittel. Es sind weitere Bestückungs- und Entnahmemittel denkbar, der Übersichtlichkeit halber jedoch hier nicht dargestellt.

In dem in Fig. 6 gezeigten Fall arbeitet die Verpackungsanlage 2 fehlerfrei und der Speichertisch 6 muss keine Verpackung 14 zwischenspeichern.

Im Fall eines Fehlers in einer der Verpackungseinrichtungen 8 zwischen den Transportbändern 10b und 10c muss der Speichertisch 6 jedoch gefüllt werden. In diesem Fall kann an der Ausschleusung 6a' keine neue Verpackung 14 ausgeschleust werden. Diese Verpackungen 14 könnten nicht weiterverarbeitet werden, da eine der Verpackungseinrichtungen 8 fehlerhaft arbeitet. Dies führt dazu, dass die an der Einschleusung 6b' einlangenden Verpackungen 14 zunächst in der Speicherlinie 16a gespeichert werden. Dies kann z.B. durch eine mechanische Sperre an dem Satelliten 18a' bewirkt werden, welche die Verpackungen 14 an einem Weitertransport hindert.

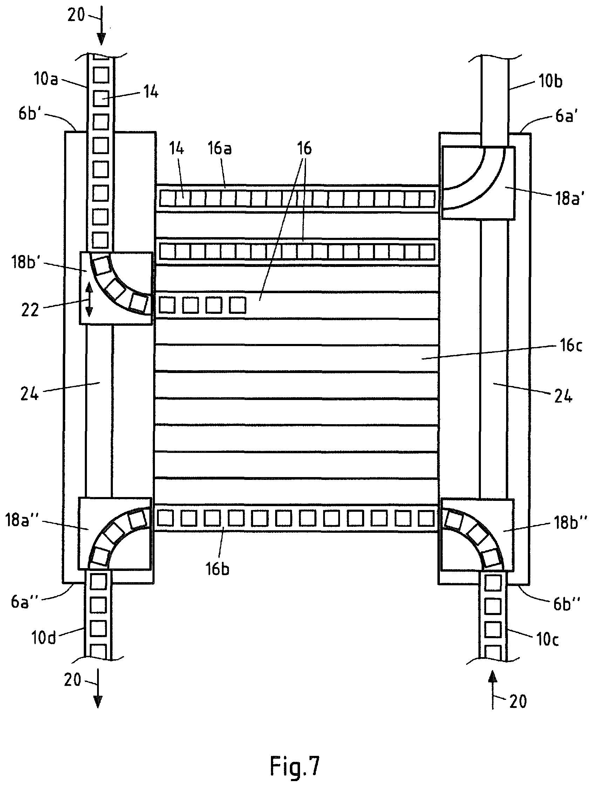

Ist die Speicherlinie 16a bis zu einem vorbestimmten Füllgrad mit Verpackungen 14 gefüllt, so bewegt sich der Satellit 18b' entlang der Richtung 22 zu der nächsten ausgewählten Speicherlinie 16. Die Auswahl, welche Speicherlinie 16 die nächste ist, kann programmierbar sein. Insbesondere ist es möglich, dass nur jede x-te Speicherlinie, insbesondere nur jede zweite, dritte oder vierte Speicherlinie 16 gefüllt wird. Dies ist in der Fig. 7 dargestellt, die den Speichertisch 6 nach Fig. 5 im Betrieb zeigt.

Nachdem die Speicherlinie 16a gefüllt wurde, wird zunächst die übernächste Speicherlinie 16 mit Verpackungen gefüllt. Anschließend wird der Satellit 18b' zu der dann übernächsten Speicherlinie 16 bewegt und Verpackungen 14 laufen, wie in der Fig. 7 dargestellt, in diese Speicherlinie 16 ein.

Zu erkennen ist, dass die an dem Transportband 10a an der Einschleusung 6b' einlangenden Verpackungen 14 über das Transportband 24 zu dem Satelliten 18b' bewegt werden. In den Zeiten, in denen der Satellit 18b' entlang der Richtung 22 bewegt ist und nicht unmittelbar einer Speicherlinie 16 zugeordnet ist, kann der Satellit 18b einen Weitertransport von Verpackungen 14 unterbinden, beispielsweise an seinem Auslass durch eine mechanische Sperre oder durch einklemmen einer Verpackung 14.

Während die an dem Einlass 6b' ankommenden Verpackungen 14 auf dem Speichertisch 6 zwischengespeichert werden, können die noch auf dem Transportband 10c vorhandenen Verpackungen 14 über die Speicherlinie 16b zu der Ausschleusung 6a" bzw. dem Transportband 10d gelangen, wie in Fig. 7 dargestellt ist. Hierdurch kann der Auslauf der zwischen der Verpackungseinrichtung 8 und der Einschleusung 6b" vorhandenen Verpackungen 14 gewährleistet werden. Das Transportband 10c läuft somit leer, wenn die Verpackungseinrichtung 8 fehlerhaft arbeitet.

Der Satellit 10b' kann bis zu einer vorher definierten Speicherlinie 16 entlang der Richtung 22 bewegt werden. Die Position, bis zu welcher Speicherlinie 16c der Satellit 18b' bewegt werden, kann berechnet werden. Beispielsweise kann die Position der Speicherlinie 16c so berechnet werden, dass das Verhältnis der Anzahl der Speicherlinien zwischen der Speicherlinie 16a und der Speicherlinie 16c sowie zwischen der Speicherlinie 16b und der Speicherlinie 16c dem Verhältnis der Fehlerhäufigkeiten an der Verarbeitungseinrichtung 8 zu der Fehlerhäufigkeiten an der Verarbeitungseinrichtung 12 sein.

Auch ist es möglich, dass die Satelliten 18b', 18b" die Speicherlinien 16 soweit auffüllen, bis eine Speicherlinie 16 erreicht ist, die mit Verpackungen 14 in einem anderen Komplettierungsgrade bereits gefüllt ist.

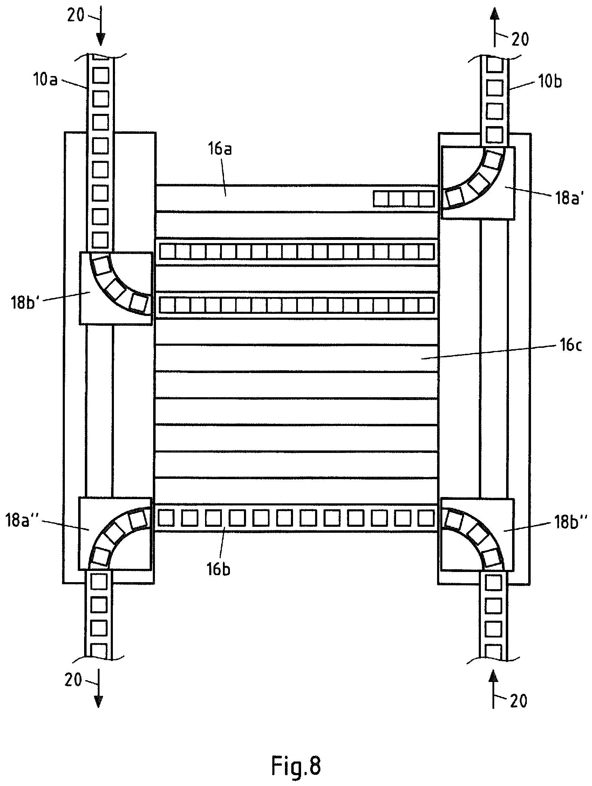

Ist der Fehler an der Verpackungseinrichtung 8 behoben, so kann der Speichertisch 6 leerlaufen. Dies geschieht dadurch, dass der Satellit 18a' von der ersten Speicherlinie 16a und sukzessive von allen weiteren, gefüllten Speicherlinien 16 die Verpackungen 14 aufnimmt und über die Ausschleusung 6a' ausschleust, wie in Fig. 8 gezeigt. Bis die erste Speicherlinie 16a geleert ist, füllt der Satellit 18b' weiterhin die Speicherlinien 16 in der vorgegebenen Reihenfolge auf.

Sobald die Speicherlinie 16a geleert ist, fährt der Satellit 18b' zurück zu dieser Speicherlinie 16a. Gleichzeitig werden die weiteren gefüllten Speicherlinien 16 durch den Satellit 18a' bedient und die Verpackungen 14 werden von diesen Speicherlinien 16 entnommen und von dem Speichertisch 6 ausgeschleust. Auch ist es möglich, dass der Satellit 18a' beim Zurückfahren zunächst die bisher ausgelassenen Speicherlinien 16 füllt, bis er an der letzten Speicherlinie 16a angelangt ist. Der Satellit 18a' entnimmt die Verpackungen 14 nacheinander aus den alternierend gefüllten Speicherlinien 16. Hierdurch wird erreicht, dass beim Leerfahren des Speichertisches 6 die Satelliten 18a', 18b' beim Wechsel zwischen zwei Speicherlinien nur kurze Wege zurücklegen. Hierdurch wird ein Rückstau auf dem Transportband 10a und die Abstände zwischen Verpackungen 14 auf dem Transportband 10b klein gehalten.

Da die Verarbeitungsrate ausgangsseitig des Speichertisches 6 größer als eingangsseitig, werden die Speicherlinien 16 durch den Satelliten 18a' schneller entleert, als diese durch den Satelliten 18b' gefüllt werden, so dass nach einer gewissen Zeit die Speicherlinien 16 geleert sind und der Zustand entsprechend Fig. 6 erreicht ist.

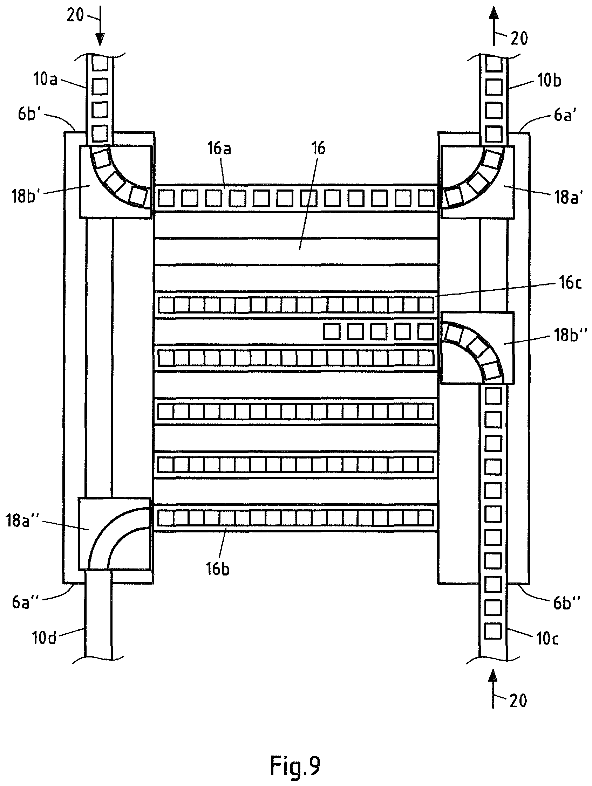

Das gleiche kann natürlich auch bei einem Fehler ausgangsseitig der Ausschleusung 6a" erfolgen, wie in Fig. 9 gezeigt, welche den Speichertisch 6 nach Fig. 5 im Betrieb zeigt. Um zu verhindern, dass die Verpackungseinrichtung 8 als auch die Verpackungseinrichtung 14 unmittelbar angehalten werden müssen, wird der Speichertisch 6 dabei zunächst ausgehend von der Speicherlinie 16b in weiteren Speicherlinien 16 gefüllt. Der Satellit 18b" bedient dabei sukzessive jeweils alternierende Speicherlinien 16, bis die Speicherlinie 16c erreicht ist. Die Position der Speicherlinie 16c kann, wie zuvor beschrieben, abhängig von dem Verhältnis der Fehlerwahrscheinlichkeiten an der Verpackungseinrichtung 8 zu der Fehlerwahrscheinlichkeiten an der Verpackungseinrichtung 12 sein.

Sobald die Speicherlinie 16c erreicht ist, fährt der Satellit 18b" in entgegengesetzter Richtung die zuvor freigelassenen Speicherlinien 16 ab und füllt diese sukzessive mit Verpackungen 14, bis entweder der Speichertisch 6 bzw. die Speicherlinien zwischen der Speicherlinie 16c und der Speicherlinie 16b vollständig gefüllt sind oder der Fehler an der Verpackungseinrichtung 12 behoben ist. Im ersten Fall werden dann zumindest auch die Verpackungseinrichtungen 8 und 14, welche an den Speichertisch 6 angrenzen, angehalten.

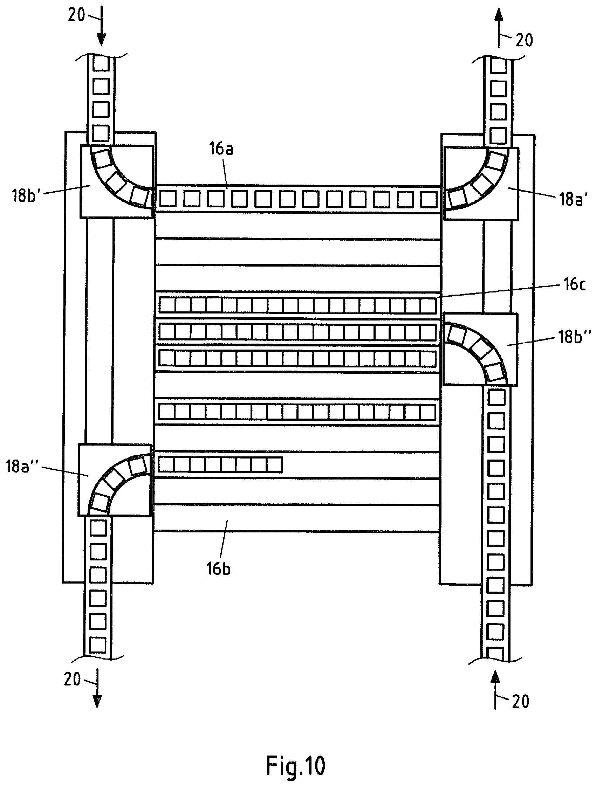

Ist der Fehler jedoch rechtzeitig behoben worden, so erfolgt ein Entleeren des Speichertisches 6 durch den Satelliten 18a" ausgehend von der Speicherlinie 16b, wie Fig. 10 zeigt. Hierbei fährt der Satellit 18a" das gleiche Muster, wie der Satellit 18b", das heißt, die Speicherlinien 16 werden alternierend angefahren, bis zur Speicherlinie 16c und zurück. Der Satellit 16b" fährt dabei zurück bis zur Speicherlinie 16b, so dass nachdem die Speicherlinien 16 zwischen der Speicherlinie 16b und der Speicherlinie 16c geleert wurden, der Zustand entsprechend Fig. 6 wieder hergestellt ist.

Fig. 11 zeigt ein weiteres Ausführungsbeispiel, bei dem auf jeweils einer Seite des Speichertisches 6 zwei Einschleusungen 6a', 6a" bzw. zwei Ausschleusungen 6b', 6b" angeordnet sind. Die Stromflussrichtung der Verpackungen 14 entlang des Speichertisches 6 ist durch die Pfeile 20 angedeutet.

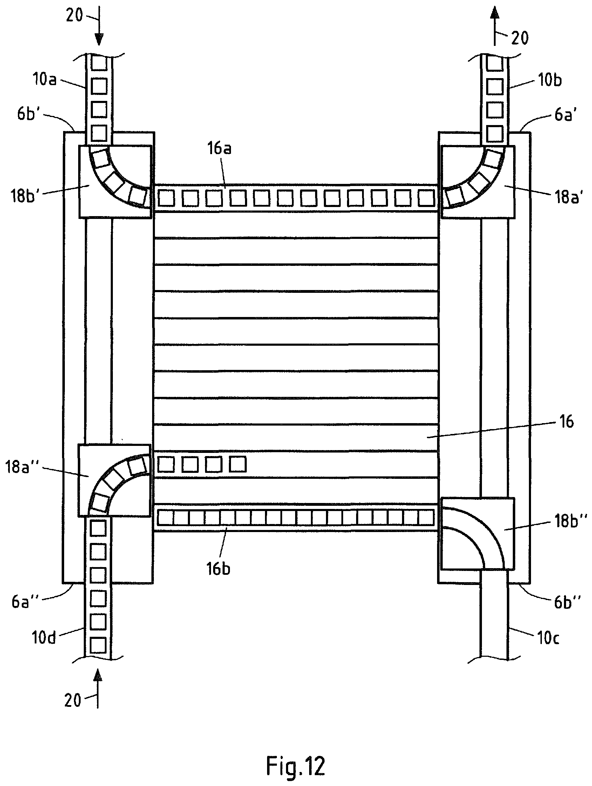

Im Fehlerfall, beispielsweise ausgangsseitig der Ausschleusung 6b" erfolgt ein Befüllen des Speichertisches 6 wie in Fig. 12 dargestellt. Dies entspricht exakt dem Muster, wie dies zuvor beschrieben wurden, mit dem einzigen Unterschied, dass das Bestücken auf der einen Seite des Speichertisches 6 erfolgt und das Entnehmen auf der anderen Seite des Speichertisches 6. Die Transportrichtung der Verpackung 14 auf dem Speichertisch 6 ist somit stets in die gleiche Richtung, da stets von den Einschleusungen 6b', 6b" die Verpackungen 14 zu den Ausschleusungen 6a', 6a" erfolgt.

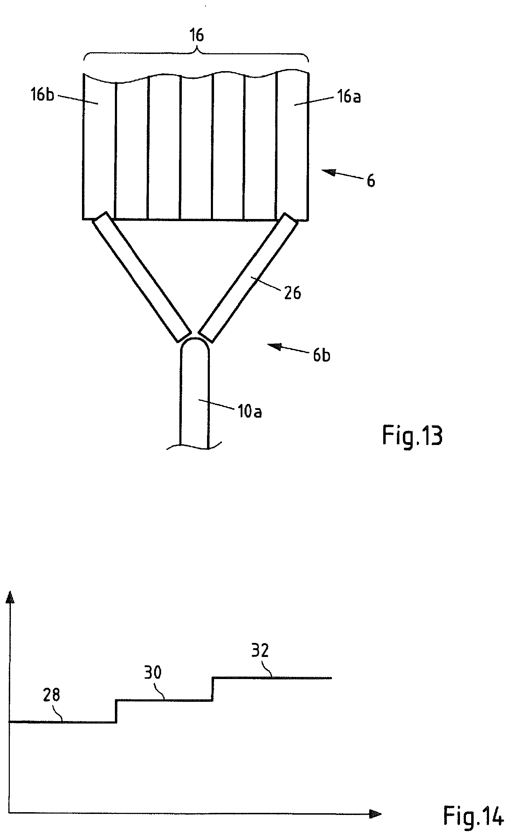

Die Bestückungsmittel und Entnahmemittel, die zuvor mittels der Satelliten 18 beschrieben wurden, können auch durch ein verschwenkbares Transportband 26, wie es in Fig. 13 dargestellt ist, realisiert sein. Hier kann an einer Einschleusung 6b ein verschwenkbares Transportband 26 vorgesehen sein, welches zwischen den Speicherlinien 16a und 16b des Speichertisches 6 wahlweise verschwenkt werden kann, wobei jede einzelne Speicherlinie 16 zwischen den Speicherlinien 16a und 16b angesprochen werden kann. Die Verpackungen 14 können somit durch Verschwenken des Transportbandes 26 auf die Speicherlinien 16 des Speichertisches 6 verteilt werden.

Wie zuvor bereits erläutert, ist es sinnvoll, dass stromabwärtig die jeweilige Verpackungseinrichtung 4, 8, 12 jeweils mit einer gegenüber der zu vorigen Verpackungseinrichtung erhöhten Verarbeitungsrate agieren. Dies ist in der Fig. 14 schematisch dargestellt. Die Verarbeitungsraten 28, 30, 32 der Verpackungseinrichtung 4, 8, 12 sind in Fig. 14 aufgetragen. Die Verarbeitungsrate 30 der Verpackungseinrichtung 8 ist gegenüber der Verarbeitungsrate 28 der Verpackungseinrichtung 4 um 20 % erhöht. Die Verarbeitungsrate 32 der Verpackungseinrichtung 12 ist gegenüber der Verarbeitungsrate 30 der Verpackungseinrichtung 8 ebenfalls um20 % erhöht. Das Maß der Erhöhung ist frei wählbar, vorzugsweise jedoch zwischen 15 und 25 %, insbesondere 20 %.

Der Übersichtlichkeit halber ist zuvor nur ein horizontaler Speichertisch 6 dargestellt. Ob die Speicherlinien 16 des Speichertisches 6 jedoch lediglich horizontale Bewegungen der Verpackungen 14 durchführen können, oder als vertikaler Speichertisch gebildet sind, ist für den Gegenstand unerheblich. Vielmehr lässt sich der Gegenstand sowohl auf horizontale als auch auf vertikale Speichertische anwenden.

Mit Hilfe des gegenständlichen Speichertisches 6 ist es möglich, unter Optimierung des Platzbedarfes die Ausfallwahrscheinlichkeit einer Verpackungsanlage 2 zu reduzieren.

### Bezugszeichenliste

- 2: Verpackungsanlage
- 4: Füllmaschine
- 4a: Ausschleusung
- 6: Speichertisch
- 6a', 6a": Ausschleusung
- 6b', 6b": Einschleusung
- 8: Strohhalm-Applikator
- 8a', 8a": Ausschleusung
- 8b', 8b": Einschleusung
- 10a-d: Transportband
- 12: Verpackungseinrichtung
- 12b: Einschleusung
- 14: Verpackung
- 14a: Strohhalm
- 16: Speicherlinien
- 18: Satellit
- 20: Stromflussrichtung
- 22: Richtung
- 24: Transportband
- 26: Transportband
- 28-32: Bearbeitungsrate

## Patentansprüche

1. Speichertisch (6) einer Verpackungsanlage (2) umfassend,
- zumindest zwei Einschleusungen (6b', 6b"), die dazu angesteuert sind Verpackungen von jeweils verschiedenen Verpackungseinrichtungen dem Speichertisch (6) zuzuführen,
- zumindest zwei Ausschleusungen (6a', 6a"), die dazu angesteuert sind Verpackungen von dem Speichertisch (6) zu entnehmen und einer stromabwärtigen Verpackungseinrichtung zuzuführen,
- eine Mehrzahl von separat voneinander bestückbaren, zwischen den Einschleusungen (6b', 6b") und den Ausschleusungen (6a', 6a") angeordneten Speicherlinien (16),
**dadurch gekennzeichnet,**
- **dass** die Einschleusungen (6b', 6b") derart angesteuert sind, um abhängig von einem Komplettierungsgrad der Verpackung die jeweilige Verpackung einer der Speicherlinien (16) zuzuführen, und,
- **dass** die Ausschleusungen (6a', 6a") derart angesteuert sind, um abhängig von dem Komplettierungsgrad der Verpackung die jeweilige Verpackung der jeweiligen Speicherlinien zu (16) entnehmen.

2. Speichertisch nach Anspruch 1,
**dadurch gekennzeichnet,**
- **dass** an jeder Einschleusung ein Transportmittel angeordnet ist und dass an jeder Ausschleusung ein Transportmittel angeordnet ist.

3. Speichertisch nach Anspruch 1 oder 2,
**dadurch gekennzeichnet,**
- **dass** jeweils einer Einschleusung (6b', 6b") eine Ausschleusung (6a', 6a") zugeordnet ist, wobei die Komplettierungsgrade der Verpackungen an den einander zugewiesenen Einschleusungen (6b', 6b") und Ausschleusungen (6a', 6a") jeweils identisch sind, und/oder
- **dass** jeweils zumindest eine Einschleusung (6b', 6b") und eine Ausschleusung (6a', 6a") an jeweils einem von zwei einander gegenüberliegenden Enden der Speicherlinien (16) angeordnet sind.

4. Speichertisch nach einem der vorangehenden Ansprüche,
**dadurch gekennzeichnet,**
- **dass** die Komplettierungsgrade an zumindest zwei der Einschleusungen (6b', 6b") voneinander verschieden sind und/oder dass die Einschleusung (6b', 6b") derart angesteuert sind, um von den Transportmitteln (10) jeweils Verpackungen in verschiedenen Komplettierungsgraden zu empfangen und/oder dass die Ausschleusungen (6a', 6a") derart angesteuert sind, um den Transportmittel (10) jeweils Verpackungen in verschiedenen Komplettierungsgraden zu übergeben.

5. Speichertisch nach einem der vorangehenden Ansprüche,
**dadurch gekennzeichnet,**
- **dass** die Einschleusungen (6b', 6b") jeweils zumindest ein Bestückungsmittel (18b', 18b") aufweisen und/oder dass die Bestückungsmittel (18b', 18b") der jeweiligen Einschleusungen (6b', 6b") getrennt voneinander betrieben sind, und/oder
- **dass** das Bestückungsmittel (18b', 18b") dazu eingerichtet sind, die Verpackungen an der Einschleusung (6b', 6b") zwischen dem jeweiligen Transportmittel (10) und einer der Speicherlinien (16) zu transportieren.

6. Speichertisch nach Anspruch 5,
**dadurch gekennzeichnet,**
- **dass** die Bestückungsmittel (18b', 18b") derart angesteuert sind, um jeweils einer Speicherlinie (16) jeweils Verpackungen mit einem gleichen Komplettierungsgrad zuzuführen.

7. Speichertisch nach einem der vorangehenden Ansprüche,
**dadurch gekennzeichnet,**
- **dass** die Ausschleusungen (6a', 6a") jeweils zumindest ein Entnahmemittel (18a', 18a") aufweisen und/oder dass die Entnahmemittel (18a', 18a") der jeweiligen Ausschleusungen (6a', 6a") getrennt voneinander betrieben sind, und/oder
- **dass** die Entnahmemittel (18a', 18a") derart angesteuert sind, um die Verpackungen an der Ausschleusung (6a', 6a") zwischen einer der Speicherlinien und dem jeweiligen Transportmittel (10) zu transportieren, und/oder
- **dass** die Entnahmemittel (18a', 18a") derart angesteuert sind, um von jeweils einer Speicherlinie (16) Verpackungen mit einem gleichen Komplettierungsgrad abzunehmen.

8. Speichertisch nach Anspruch 5 bis 7,
**dadurch gekennzeichnet,**
- **dass** die Entnahmemittel (18a', 18a") und/oder die Bestückungsmittel (18b', 18b") als linear betriebene Satelliten gebildet sind, die quer, vorzugsweise senkrecht zu den Speicherlinien bewegt sind, oder
- **dass** die Entnahmemittel (18a', 18a") und/oder die Bestückungsmittel (18b', 18b") als schwenkbar betriebene Bänder (24) gebildet sind, die ausgehend von dem jeweiligen Transportband (24) zwischen den Speicherlinien (16) verschwenken.

9. Speichertisch nach einem der vorangehenden Ansprüche 5 bis 8,
**dadurch gekennzeichnet,**
- **dass** die Speicherlinien (16) Transportmittel (24, 26) aufweisen, mit denen die Verpackungen zwischen Entnahmemittel (18a', 18a") und Bestückungsmittel (18b', 18b") transportierbar sind, wobei die Transportmittel (24, 26) insbesondere Transportbänder oder Transportgurte aufweisen.

10. Speichertisch nach einem der vorangehenden Ansprüche 5 bis 9,
**dadurch gekennzeichnet,**
- **dass** die Speicherlinien (16) jeweils von zumindest zweien der Bestückungsmittel (18b', 18b") bedarfsweise bestückbar sind, derart, dass eine Speicherlinie (16) in zeitlicher Abfolge zunächst Verpackungen in einem ersten Komplettierungsgrad von einem ersten Bestückungsmittel (18b') aufnimmt und anschließend Verpackungen in einem zweiten, von dem ersten verschiedenen Komplettierungsgrad von einem zweiten Bestückungsmittel (18b") aufnimmt.

11. Speichertisch nach einem der vorangehenden Ansprüche 5 bis 10,
**dadurch gekennzeichnet,**
- **dass** zumindest zwei der Speicherlinien (16) jeweils von zumindest zweien der Bestückungsmittel (18b', 18b") zeitgleich bestückbar sind, und/oder
- **dass** zumindest zwei Speicherlinien (16) derart angesteuert sind, um zeitgleich Verpackungen in zwei voneinander verschiedenen Komplettierungsgraden von jeweils einem der Bestückungsmittel (18b', 18b") aufzunehmen, und/oder
- **dass** eine Mehrzahl an Speicherlinien (16) nebeneinander angeordnet ist.

12. Speichertisch nach einem der vorangehenden Ansprüche 5 bis 11,
**dadurch gekennzeichnet,**
- **dass** zumindest zwei Bestückungsmittel (18b', 18b") an den Speicherlinien (16) angeordnet sind und dass die Bestückungsmittel (18b', 18b") jeweils exklusiv einer von zwei, vorzugsweise einander gegenüberliegenden Speicherlinien (16) zugeordnet sind.

13. Speichertisch nach einem der vorangehenden Ansprüche 5 bis 12,
**dadurch gekennzeichnet,**
- **dass** die Bestückungsmittel (18b', 18b") dazu eingerichtet sind, die Speicherlinien (16) jeweils ausgehend von einer peripheren Speicherlinie (16a, b) nacheinander zu bestücken, und/oder
- **dass** die Bestückungsmittel (18b', 18b") derart angesteuert sind, um nach Erreichen eines definierten Füllgrades einer der Speicherlinien (16) eine nächste der Speicherlinien (16) zu bestücken, und/oder
- **dass** die Bestückungsmittel (18b', 18b") derart angesteuert sind, um die Speicherlinien (16) alternierend zu bestücken, wobei zwischen zwei bestückten Speicherlinien (16) jeweils zumindest eine unbestückte Speicherlinie (16) vorgesehen ist.

14. Verpackungsanlage mit einem Speichertisch nach einem der vorangehenden Ansprüche und mit
- einer ersten Verpackungseinrichtung (4),
- zumindest einer zweiten Verpackungseinrichtung (6), und
- zumindest einer dritten Verpackungseinrichtung (12), wobei
- die erste Verpackungseinrichtung (4) derart angesteuert ist, um einem ersten Transportmittel (10a) Verpackungen in einem ersten Komplettierungsgrad zuzuführen,
- eine erste Einschleusung (6b') derart angesteuert ist, um die Verpackungen von dem ersten Transportmittel (10a) zumindest einer ersten Speicherlinie (16) eines Speichertisches (6) zuzuführen,
- eine erste Ausschleusung (6a') derart angesteuert ist, um die Verpackungen in dem ersten Komplettierungsgrad von der zumindest einen ersten Speicherlinie (16) zu entnehmen und einem zweiten Transportmittel (10b) zuführen,
- die zumindest eine zweite Verpackungseinrichtung (8) derart angesteuert ist, um die Verpackungen von dem zweiten Transportmittel (10b) zu empfangen, den Komplettierungsgrad der Verpackungen in einen zweiten Komplettierungsgrad zu verändern und einem dritten Transportmittel (10c) zuzuführen,
- eine zweite Einschleusung (6b") derart angesteuert ist, um die Verpackungen von dem dritten Transportmittel (10c) zumindest einer anderen als der ersten Speicherlinie (16) des Speichertisches (6) zuzuführen,
- eine zweite Ausschleusung (6a") derart angesteuert ist, um die Verpackungen in dem zweiten Komplettierungsgrad von der zumindest einen zweiten Speicherlinie (16) zu entnehmen und einem vierten Transportmittel (10d) zuzuführen, und
- die dritte Verpackungseinrichtung (12) derart angesteuert sind, um die Verpackungen von dem vierten Transportmittel (10d) zu empfangen.

15. Verpackungsanlage nach Anspruch 14,
**dadurch gekennzeichnet,**
- **dass** die Verarbeitungsrate der dritten Verpackungseinrichtung (12) höher ist als die Verarbeitungsrate zumindest einer der zweiten Verpackungseinrichtungen (8) und/oder dass die Verarbeitungsrate zumindest einer der zweiten Verpackungseinrichtung (8) höher ist als die Verarbeitungsrate der ersten Verpackungseinrichtung, (4) insbesondere dass die Verarbeitungsrate einer der Verpackungseinrichtung (8, 12) um zumindest 20 % höher ist als die Verarbeitungsrate einer vorgelagerten Verpackungseinrichtung (4, 8).

16. Verfahren zum Betreiben eines Speichertisches, insbesondere eines Speichertisches nach einem der vorangehenden Ansprüche bei dem,
- zumindest zwei Einschleusungen (6b', 6b"),
- zumindest zwei Ausschleusungen (6a', 6a"),
- eine Mehrzahl von zwischen zumindest zwei Einschleusungen (6b', 6b") und zumindest zwei Ausschleusungen (6a', 6a") angeordneten Speicherlinien (16) separat voneinander mit Verpackungen bestückt werden,
**dadurch gekennzeichnet,**
- **dass** abhängig von einem Komplettierungsgrad einer Verpackung die jeweilige Verpackung einer der Speicherlinien (16) zugeführt wird, wobei voneinander verschiedenen Speicherlinien des Speichertischs (6) Verpackungen in voneinander verschiedenen Komplettierungsgraden von verschiedenen Verpackungseinrichtungen (4, 8, 12) einer Verpackungsanlage (2) zugeführt werden,
- **dass** abhängig von dem Komplettierungsgrad der Verpackung die jeweilige Verpackung der jeweiligen Speicherlinien (16) entnommen wird.

## Claims

1. Storage table (6) of a packaging plant (2) comprising,
- at least two infeeds (6b', 6b") which are controlled to feed packages from respective different packaging devices to the storage table (6),
- at least two ejectors (6a', 6a") which are controlled to remove packages from the storage table (6) and to feed them to a downstream packaging device,
- a plurality of storage lines (16) which can be loaded separately from one another and are arranged between the infeeds (6b', 6b") and the outfeeds (6a', 6a"), **characterized in that**
- the infeeds (6b', 6b") are controlled in such a way as to feed the respective package to one of the storage lines (16) as a function of a degree of completion of the package, and,
- the ejectors (6a', 6a") are controlled in such a way as to remove the respective package from the respective storage lines (16) as a function of the degree of completion of the package.

2. Storage table according to claim 1,
**characterized in that**
- a transport means is arranged at each infeed and that a transport means is arranged at each outfeed.

3. Storage table according to claim 1 or 2,
**characterized in that**
- an infeed (6b', 6b") is assigned a respective outfeed (6a', 6a"), wherein the degrees of completion of the packages at the infeeds (6b', 6b") and outfeeds (6a', 6a") assigned to one another being respectively identical, and/or
- respectively at least one infeed (6b', 6b") and one outfeed (6a', 6a") are arranged at respective one of two mutually opposite ends of the storage lines (16).

4. Storage table according to one of the preceding claims,
**characterized in that**
- the degrees of completion at at least two of the infeeds (6b', 6b") are different from one another and/or **in that** the infeeds (6b', 6b") are controlled in such a way as to receive from the transport means (10) packages in different degrees of completion in each case and/or **in that** the outfeeds (6a', 6a") are controlled in such a way as to transfer to the transport means (10) packages in different degrees of completion in each case.

5. Storage table according to one of the preceding claims,
**characterized in that**
- the infeeds (6b', 6b") each have at least one loading means (18b', 18b") and/or **in that** the loading means (18b', 18b") of the respective infeeds (6b', 6b") are operated separately from one another, and/or
- the loading means (18b', 18b") are arranged to transport the packages at the infeed (6b', 6b") between the respective transport means (10) and one of the storage lines (16).

6. Storage table according to claim 5,
**characterized in that**
- the loading means (18b', 18b") are controlled in such a way as to feed packages with an identical degree of completion to a respective storage line (16).

7. Storage table according to one of the preceding claims,
**characterized in that**
- the outfeeds (6a', 6a") each have at least one removal means (18a', 18a") and/or in that the removal means (18a', 18a") of the respective outfeeds (6a', 6a") are operated separately from one another, and/or
- the removal means (18a', 18a") are controlled in such a way as to transport the packages at the outfeed (6a', 6a") between one of the storage lines and the respective transport means (10), and/or
- the removal means (18a', 18a") are controlled in such a way as to remove from a respective storage line (16) packages having an identical degree of completion.

8. Storage table according to claim 5 to 7,
**characterized in that**
- the removal means (18a', 18a") and/or the loading means (18b', 18b") are formed as linearly operated satellites which are moved transversely, preferably perpendicularly, to the storage lines, or
- the removal means (18a', 18a") and/or the loading means (18b', 18b") are formed as pivotably operated belts (24) which, starting from the respective conveyor belt (24), pivot between the storage lines (16).

9. Storage table according to one of the preceding claims 5 to 8,
**characterized in that**
- the storage lines (16) have transport means (24, 26) with which the packages can be transported between removal means (18a', 18a") and loading means (18b', 18b"), the transport means (24, 26) having, in particular, transport belts or transport belts.

10. Storage table according to any of the preceding claims 5 to 9,
**characterized in that**
- the storage lines (16) can each be loaded as required by at least two of the loading means (18b', 18b"), in such a way that a storage line (16), in chronological sequence, first picks up packages in a first degree of completion from a first loading means (18b') and then picks up packages in a second degree of completion, different from the first, from a second loading means (18b").

11. Storage table according to any one of the preceding claims 5 to 10, **characterized in that**
- at least two of the storage lines (16) can each be loaded simultaneously by at least two of the loading means (18b', 18b"), and/or
- at least two storage lines (16) are controlled in such a way as to simultaneously receive packages in two different degrees of completion from in each case one of the loading means (18b', 18b"), and/or
- a plurality of storage lines (16) are arranged next to one another.

12. Storage table according to any one of the preceding claims 5 to 11,
**characterized in that**
- at least two loading means (18b', 18b") are arranged on the storage lines (16), and **in that** the loading means (18b', 18b") are each assigned exclusively to one of two, preferably mutually opposite, storage lines (16).

13. Storage table according to one of the preceding claims 5 to 12,
**characterized in that**
- the loading means (18b', 18b") are arranged to sequentially load the storage lines (16) in each case starting from a peripheral storage line (16a, b), and/or
- the loading means (18b', 18b") are controlled in such a way that, after a defined filling level of one of the storage lines (16) has been reached, a next one of the storage lines (16) is loaded, and/or
- the loading means (18b', 18b") are controlled in such a way that the storage lines (16) are loaded alternately, at least one unloaded storage line (16) being provided in each case between two loaded storage lines (16).

14. Packaging system with a storage table according to one of the preceding claims and with
- a first packaging device (4),
- at least one second packaging device (6), and
- at least one third packaging device (12), wherein
- the first packaging device (4) being controlled to feed packages in a first degree of completion to a first transport means (10a)
- a first infeed (6b') is controlled to feed the packages from the first transport means (10a) to at least a first storage line (16) of a storage table (6),
- a first outfeed (6a') is controlled in such a way as to remove the packages in the first degree of completion from the at least one first storage line (16) and to feed them to a second transport means (10b),
- the at least one second packaging means (8) is controlled to receive the packages from the second transport means (10b), to change the degree of completion of the packages to a second degree of completion, and to feed the packages to a third transport means (10c),
- a second infeed (6b") is controlled so as to feed the packages from the third transport means (10c) to at least one storage line (16) other than the first storage line (16) of the storage table (6),
- a second outfeed (6a") is controlled to remove the packages in the second degree of completion from the at least one second storage line (16) and to feed them to a fourth transport means (10d), and
- the third packaging means (12) are controlled to receive the packages from the fourth transport means (10d).

15. Packaging system according to claim 14,
**characterized in that**
- the processing rate of the third packaging device (12) is higher than the processing rate of at least one of the second packaging devices (8) and/or **in that** the processing rate of at least one of the second packaging devices (8) is higher than the processing rate of the first packaging device, (4) in particular **in that** the processing rate of one of the packaging devices (8, 12) is higher by at least 20% than the processing rate of an upstream packaging device (4, 8).

16. Method of operating a storage table, in particular a storage table according to one of the preceding claims, in which,
- at least two infeeds (6b', 6b"),
- at least two outfeeds (6a', 6a"),
- a plurality of storage lines (16) arranged between at least two infeeds (6b', 6b") and at least two outfeeds (6a', 6a") are loaded with packages separately from one another,
**characterized in that**
- depending on a degree of completion of a package, the respective package is fed to one of the storage lines (16), packages in different degrees of completion from different packaging devices (4, 8, 12) being fed to different storage lines of the storage table (6) of a packaging system (2),
- depending on the degree of completion of the packaging, the respective packaging is removed from the respective storage lines (16).

## Revendications

1. Table de stockage (6) d'une installation d'emballage (2) comprenant,
- au moins deux dispositifs d'entrée (6b', 6b"), qui sont commandés pour amener à la table de stockage (6) des emballages provenant respectivement de différents dispositifs d'emballage,
- au moins deux dispositifs de sortie (6a', 6a"), qui sont commandés pour prélever des emballages de la table de stockage (6) et les amener à un dispositif d'emballage en aval,
- une pluralité de lignes de stockage (16) pouvant être chargées séparément les unes des autres et disposées entre les dispositifs d'entrée (6b', 6b") et les dispositifs de sortie (6a', 6a"),
**caractérisée**
- **en ce que** les dispositifs d'entrée (6b', 6b") sont commandés de manière à amener l'emballage respectif à l'une des lignes de stockage (16) en fonction d'un degré de complétion de l'emballage, et,
- **en ce que** les dispositifs de sortie (6a', 6a") sont commandés de manière à prélever l'emballage respectif des lignes de stockage respectives (16) en fonction du degré de complétion de l'emballage.

2. Table de stockage selon la revendication 1,
**caractérisée**
- **en ce qu'**un moyen de transport est disposé sur chaque dispositif d'entrée et
- **en ce qu'**un moyen de transport est disposé sur chaque dispositif de sortie.

3. Table de stockage selon la revendication 1 ou 2,
**caractérisée**
- **en ce qu'**à chaque dispositif de sortie (6a', 6a") est associé un dispositif d'entrée (6b', 6b"), les degrés de complétion des emballages étant identiques au niveau des dispositifs d'entrée (6b', 6b") et des dispositifs de sortie (6a', 6a") associés les uns aux autres,
et/ou
- **en ce que** respectivement au moins un dispositif d'entrée (6b', 6b") et un dispositif de sortie (6a', 6a") sont disposés respectivement à l'une de deux extrémités opposées des lignes de stockage (16).

4. Table de stockage selon l'une quelconque des revendications précédentes, **caractérisée**
- **en ce que** les degrés de complétion sont différents les uns des autres au niveau d'au moins deux des dispositifs d'entrée (6b', 6b")
et/ou
- **en ce que** les dispositifs d'entrée (6b', 6b") sont commandés de manière à recevoir des moyens de transport (10) des emballages présentant respectivement des degrés de complétion différents
et/ou
- **en ce que** les dispositifs de sortie (6a', 6a") sont commandés de manière à remettre aux moyens de transport (10) des emballages présentant respectivement des degrés de complétion différents.

5. Table de stockage selon l'une quelconque des revendications précédentes, **caractérisée**
- **en ce que** les dispositifs d'entrée (6b', 6b") présentent chacun au moins un moyen de chargement (18b', 18b")
et/ou
- **en ce que** les moyens de chargement (18b', 18b") des dispositifs d'entrée respectifs (6b', 6b") sont exploités séparément les uns des autres,
et/ou
- **en ce que** les moyens de chargement (18b', 18b") sont conditionnés pour transporter les emballages au niveau du dispositif d'entrée (6b', 6b") entre le moyen de transport (10) respectif et l'une des lignes de stockage (16).

6. Table de stockage selon la revendication 5,
**caractérisée**
- **en ce que** les moyens de chargement (18b', 18b") sont commandés de manière à amener respectivement à une ligne de stockage (16) des emballages avec chacun un même degré de complétion.

7. Table de stockage selon l'une quelconque des revendications précédentes, **caractérisée**
- **en ce que** les dispositifs de sortie (6a', 6a") présentent chacun au moins un moyen de prélèvement (18a', 18a")
et/ou
- **en ce que** les moyens de prélèvement (18a', 18a") des dispositifs de sortie (6a', 6a") respectifs sont exploités séparément les uns des autres,
et/ou
- **en ce que** les moyens de prélèvement (18a', 18a") sont commandés de manière à transporter les emballages au niveau du dispositif de sortie (6a', 6a") entre l'une des lignes de stockage et le moyen de transport (10) respectif,
et/ou
- **en ce que** les moyens de prélèvement (18a', 18a") sont commandés de manière à prélever d'une ligne de stockage (16) respective des emballages présentant un même degré de complétion.

8. Table de stockage selon les revendications 5 à 7,
**caractérisée**
- **en ce que** les moyens de prélèvement (18a', 18a") et/ou les moyens de chargement (18b', 18b") sont formés comme des satellites à commande linéaire, qui sont déplacés transversalement, de préférence perpendiculairement aux lignes de stockage,
ou
- **en ce que** les moyens de prélèvement (18a', 18a") et/ou les moyens de chargement (18b', 18b") sont formés comme des bandes (24) actionnées de manière pivotante, qui pivotent entre les lignes de stockage (16) en partant de la bande de transport (24) respective.

9. Table de stockage selon l'une quelconque des revendications 5 à 8 précédentes, **caractérisée**
- **en ce que** les lignes de stockage (16) présentent des moyens de transport (24, 26), avec lesquels les emballages peuvent être transportés entre les moyens de prélèvement (18a', 18a") et les moyens de chargement (18b', 18b"), les moyens de transport (24, 26) présentant en particulier des bandes de transport ou des courroies de transport.

10. Table de stockage selon l'une quelconque des revendications 5 à 9 précédentes, **caractérisée**
- **en ce que** les lignes de stockage (16) peuvent être chargées chacune selon les besoins par au moins deux des moyens de chargement (18b', 18b"), de telle sorte qu'une ligne de stockage (16) reçoit d'abord, dans un ordre chronologique, des emballages à un premier degré de complétion d'un premier moyen de chargement (18b'), puis reçoit des emballages à un deuxième degré de complétion, différent du premier, d'un deuxième moyen de chargement (18b").

11. Table de stockage selon l'une quelconque des revendications 5 à 10 précédentes, **caractérisée**
- **en ce qu'**au moins deux des lignes de stockage (16) peuvent être chargées chacune simultanément par au moins deux des moyens de chargement (18b', 18b"),
et/ou
- **en ce qu'**au moins deux lignes de stockage (16) sont commandées de manière à recevoir chacune simultanément des emballages à deux degrés de complétion différents l'un de l'autre par l'un des moyens de chargement (18b', 18b"),
et/ou
- **en ce qu'**une pluralité de lignes de stockage (16) est disposée les unes à côté des autres.

12. Table de stockage selon l'une quelconque des revendications 5 à 11 précédentes, **caractérisée**
- **en ce qu'**au moins deux moyens de chargement (18b', 18b") sont disposés au niveau des lignes de stockage (16) et
- **en ce que** les moyens de chargement (18b', 18b") sont associés chacun exclusivement à l'une de deux lignes de stockage (16), de préférence opposées l'une à l'autre.

13. Table de stockage selon l'une quelconque des revendications 5 à 12 précédentes, **caractérisée**
- **en ce que** les moyens de chargement (18b', 18b") sont conditionnés pour équiper successivement les lignes de stockage (16) en partant respectivement d'une ligne de stockage périphérique (16a, b),
et/ou
- **en ce que** les moyens de chargement (18b', 18b") sont commandés de manière à, après avoir atteint un degré de remplissage défini d'une des lignes de stockage (16), charger une ligne suivante des lignes de stockage (16),
et/ou
- **en ce que** les moyens de chargement (18b', 18b") sont commandés de manière à charger les lignes de stockage (16) en alternance, au moins une ligne de stockage (16) non chargée étant prévue entre deux lignes de stockage (16) chargées.

14. Installation d'emballage avec une table de stockage selon l'une des revendications précédentes et avec
- un premier dispositif d'emballage (4),
- au moins un deuxième dispositif d'emballage (6), et
- au moins un troisième dispositif d'emballage (12),
où
- le premier dispositif d'emballage (4) est commandé de manière à amener à un premier moyen de transport (10a) des emballages à un premier degré de complétion,
- un premier dispositif d'entrée (6b') est commandé de manière à amener les emballages du premier moyen de transport (10a) à au moins une première ligne de stockage (16) d'une table de stockage (6),
- un premier dispositif de sortie (6a') est commandé de manière à prélever les emballages ayant le premier degré de complétion de l'au moins une première ligne de stockage (16), et à les amener à un deuxième moyen de transport (10b),
- l'au moins un deuxième dispositif d'emballage (8) est commandé de manière à recevoir les emballages du deuxième moyen de transport (10b), à modifier le degré de complétion des emballages en un deuxième degré de complétion et à les amener à un troisième moyen de transport (10c),
- un deuxième dispositif entrée (6b") est commandé de manière à amener les emballages du troisième moyen de transport (10c) à au moins une autre ligne de stockage que la première ligne de stockage(16) de la table de stockage (6),
- un deuxième dispositif d'évacuation (6a") est commandé de manière à prélever les emballages ayant le deuxième degré de complétion de l'au moins une deuxième ligne de stockage (16) et à les amener à un quatrième moyen de transport (10d), et
- le troisième dispositif d'emballage (12) est commandé de manière à recevoir les emballages du quatrième moyen de transport (10d).

15. Installation d'emballage selon la revendication 14,
**caractérisée**
- **en ce que** la cadence de traitement du troisième dispositif d'emballage (12) est supérieure à la cadence de traitement d'au moins l'un des deuxièmes dispositifs d'emballage (8)
et/ou
- **en ce que** la cadence de traitement d'au moins l'un des deuxièmes dispositifs d'emballage (8) est supérieure à la cadence de traitement du premier dispositif d'emballage (4),
- notamment en ce que la cadence de traitement de l'un des dispositifs d'emballage (8, 12) est supérieure d'au moins 20 % à la cadence de traitement d'un dispositif d'emballage (4, 8) situé en amont.

16. Procédé d'exploitation d'une table de stockage, en particulier d'une table de stockage selon l'une des revendications précédentes, dans lequel,
- au moins deux dispositif d'entrée (6b', 6b"),
- au moins deux dispositifs de sortie (6a', 6a"),
- une pluralité de lignes de stockage (16) disposées entre au moins deux dispositifs d'entrée (6b', 6b") et au moins deux dispositifs de sortie (6a', 6a") sont chargées avec des emballages séparément les unes des autres,
**caractérisé**
- **en ce que**, en fonction d'un degré de complétion d'un emballage, l'emballage respectif est amené à l'une des lignes de stockage (16), des emballages à des degrés de complétion différents les uns des autres de différents dispositifs d'emballage (4, 8, 12) d'une installation d'emballage (2) étant amenés à des lignes de stockage différentes les unes des autres de la table de stockage (6),
- **en ce que**, en fonction du degré de complétion de l'emballage, l'emballage respectif est prélevé des lignes de stockage respectives (16).
